# EUROPEAN PATENT SPECIFICATION

(11) **EP 4 273 649 B1**
(45) Date of publication and mention of the grant of the patent: **23.09.2026**
(21) Application number: 22208935.1
(22) Date of filing: 22.11.2022
(51) Int. Cl.: B25J 9/00, B25J 9/16, B25J 11/00, G05B 19/423

(54) **PAINTING ROBOT OPERATION PROGRAM GENERATION SYSTEM, OPERATION PROGRAM GENERATION METHOD, AND TEACHING POINT GENERATION APPARATUS**
SYSTEM ZUR ERZEUGUNG EINES LACKIERROBOTERBETRIEBSPROGRAMMS, VERFAHREN ZUR ERZEUGUNG EINES BETRIEBSPROGRAMMS UND VORRICHTUNG ZUR ERZEUGUNG EINES LEHRPUNKTS
SYSTÈME DE GÉNÉRATION DE PROGRAMME D'OPÉRATION DE ROBOT DE PEINTURE, PROCÉDÉ DE GÉNÉRATION DE PROGRAMME D'OPÉRATION ET APPAREIL DE GÉNÉRATION DE POINT D'APPRENTISSAGE

(30) Priority: 10.02.2022 JP 2022019659
(43) Date of publication of application: 08.11.2023
(73) Proprietor: Suzuki Motor Corporation, Hamamatsu-shi, Shizuoka 432-8611 (JP)
(72) Inventor: EBINA, Yusuke, Hamamatsu-shi, 432-8611 (JP); WATANABE, Naoto, Hamamatsu-shi, 432-8611 (JP); SAKAMOTO, Michisuke, Hamamatsu-shi, 432-8611 (JP); MAGATA, Hiroki, Hamamatsu-shi, 432-8611 (JP); SAKAKIBARA, Mitsutoshi, Hamamatsu-shi, 432-8611 (JP)
(74) Representative: Haseltine Lake Kempner LLP

(56) References cited:
- EP-B1- 2 845 065
- CN-A- 107 309 882
- CN-A- 108 908 298
- JP-A- 2001 060 108
- US-A1- 2005 149 231
- US-A1- 2013 236 050
- US-A1- 2015 112 482

## Description

### [Technical Field]

The present invention relates to a painting robot operation program generation system, to an operation program generation method, and to a teaching point generation apparatus.

### [Background Art]

As a method of teaching a painting robot that performs automatic painting, offline teaching is known. The offline teaching generates an operation program through software of a computer, and transfers the generated operation program to the painting robot. For example, Patent Literature 1 discloses an operation program generation apparatus that sets an operation path of an automatic gun of a painting robot, based on position information on a hand gun through manual painting, and generates an operation program for painting. According to this apparatus, the operation of manual painting for an actual paint target object through the hand gun is continuously imaged by an imaging device, and the position information on the hand gun is continuously obtained based on the taken images. To generate teaching points, the apparatus is configured to determine whether or not to decimate the gun position information, based on angles formed by three gun positions identified by three pieces of gun position information.

### [Citation List]

### [Patent Literature]

[Patent Literature 1] JP 2020-116509 A
[Patent Literature 2] US2005/149231 A1
[Patent Literature 3] US2013/236050 A1
[Patent Literature 4] EP 2 845 065 B1

### [Summary of Invention]

### [Problem to be Solved by the Invention]

According to the apparatus in Patent Literature 1 described above, decimation is made based on the angles formed by three gun positions in order to prevent degradation of reproducibility of the operation trajectory including turn-around points. Accordingly, in a case in which the operation trajectory is a gentle arc shape, the reproducibility of the operation trajectory is reduced.

Patent Literature 2 discloses a method and system for programming an industrial robot.

Patent Literature 3 discloses a method of post-correction of 3D feature point-based direct teaching trajectory.

Patent Literature 4 discloses an imitation learning method for a multi-axis manipulator.

The present invention has been made in view of the situation as described above, and has an object to generate an operation program for offline teaching, the program being capable of improving the operation efficiency of the painting robot and improving the reproducibility of the operation trajectory and the paint film thickness.

### [Means for Solving the Problem]

According to an aspect of the present invention, a painting robot operation program generation system includes: a painting simulation apparatus for performing pseudo painting in a virtual space, including: a pseudo painting tool that includes a trigger operated by a hand of a user to perform pseudo painting in the virtual space; an image generation apparatus that is configured to generate an image representing pseudo painting applying virtual paint onto a virtual paint target object through the pseudo painting tool in the virtual space in accordance with an operation by the user for the pseudo painting tool, the image including a three-dimensional image of the virtual paint target object arranged in the virtual space; a head-mounted display that is worn by the user, and displays an image generated by the image generation apparatus, an operation detection apparatus that detects an operation of the pseudo painting tool in the virtual space; and a log data generation apparatus that generates log data pertaining to the operation of the pseudo painting tool, from a detection result by the operation detection apparatus; a teaching point generation apparatus that performs discretization calculation for the log data generated by the log data generation apparatus, and generates teaching points corresponding to the log data after the discretization calculation; and an operation program generation apparatus that generates an operation program for teaching an operation of a painting robot, based on the teaching points generated by the teaching point generation apparatus.

According to another aspect of the present invention, a painting robot operation program generation method includes: generating an image representing pseudo painting applying virtual paint onto a virtual paint target object in a virtual space through a pseudo painting tool that includes a trigger operated by a hand of a user for performing pseudo painting in the virtual space, in accordance with an operation of the pseudo painting tool, the image including a three-dimensional image of the virtual paint target object arranged in the virtual space; displaying the generated image on a head-mounted display worn by the user; detecting the operation of the pseudo painting tool in the virtual space; generating log data pertaining to the operation of the pseudo painting tool, from a detection result of the operation of the pseudo painting tool; performing discretization calculation for the generated log data, and generating teaching points corresponding to the log data after the discretization calculation; and generating an operation program for teaching an operation of a painting robot, based on the generated teaching points.

According to another aspect of the present invention, a teaching point generation apparatus that generates teaching points for allowing a painting robot to operate, is configured to execute: a step of obtaining log data on a position of a painting device that performs painting on a paint target object; and a step of performing discretization calculation, using a Ramer-Douglas-Peucker (RDP) algorithm, for the log data on the obtained position, and generating teaching points corresponding to the log data after the discretization calculation.

According to another aspect of the present invention, a teaching point generation apparatus that generates teaching points for allowing a painting robot to operate, is configured to execute: a step of obtaining log data on a position and log data on a moving speed pertaining to a painting device that performs painting on a paint target object; and a step of performing discretization calculation for the obtained log data on the position, using a threshold dynamically set in accordance with the moving speed, and generating teaching points corresponding to the log data after the discretization calculation.

According to another aspect of the present invention, a painting robot operation program generation system includes: a painting simulation apparatus that performs pseudo painting in a virtual space using a pseudo painting tool, and generates log data pertaining to an operation of the pseudo painting tool in the virtual space; and a teaching point generation apparatus that generates teaching points for allowing a painting robot to operate, based on the log data pertaining to the operation of the pseudo painting tool generated by the painting simulation apparatus, wherein: the log data pertaining to the operation of the pseudo painting tool includes coordinate data on the pseudo painting tool associated with a timestamp; and the teaching point generation apparatus is configured to execute: a first step of performing first discretization calculation, using a Ramer-Douglas-Peucker (RDP) algorithm, for the coordinate data generated by the painting simulation apparatus, and generating a plurality of first teaching points corresponding to the coordinate data after the first discretization calculation; a second step of calculating a moving speed at each point in the coordinate data, from the coordinate data generated by the painting simulation apparatus and from the timestamp, performing second discretization calculation using the calculated moving speed, for the coordinate data, and generating a plurality of second teaching points corresponding to the coordinate data after the second discretization calculation; and a third step of totaling the plurality of first teaching points generated in the first step, and the plurality of second teaching points generated in the second step, and generating a plurality of third teaching points.

### [Advantageous Effects of Invention]

According to the present invention, teaching points can be generated with which the operation efficiency of the painting robot can be improved, and the reproducibility of the operation trajectory and the paint film thickness can also be improved.

### [Brief Description of Drawings]

[Figure 1] Figure 1 is a schematic diagram showing an entire configuration of a painting robot operation program generation system according to an embodiment of the present invention.
[Figure 2] Figure 2 is a diagram illustrating an overview of processes of the painting robot operation program generation system shown in Figure 1.
[Figure 3] Figures 3(a) to 3(d) are diagrams illustrating discretization calculation using an RDP algorithm.
[Figure 4] Figure 4 is a flowchart illustrating a flow of the discretization calculation using the RDP algorithm.
[Figure 5] Figures 5(a) to 5(d) are diagrams showing results of discretization calculation using different thresholds.
[Figure 6] Figure 6 is a diagram showing the relationship between reproducibility of an operation trajectory of a pseudo painting tool and a decimation rate of coordinate data.
[Figure 7] Figure 7 shows the relationship between the reproducibility of the operation trajectory of the pseudo painting tool and a standard deviation between film thickness errors before and after the discretization calculation.
[Figure 8] Figures 8(a) to 8(c) are diagrams illustrating discretization calculation using a moving speed of the pseudo painting tool.
[Figure 9] Figure 9 is a flowchart illustrating a flow of the discretization calculation using the moving speed of the pseudo painting tool.
[Figure 10] Figure 10 is a flowchart illustrating an operation program generation method by the painting robot operation program generation system.

### [Mode for Carrying Out the Invention]

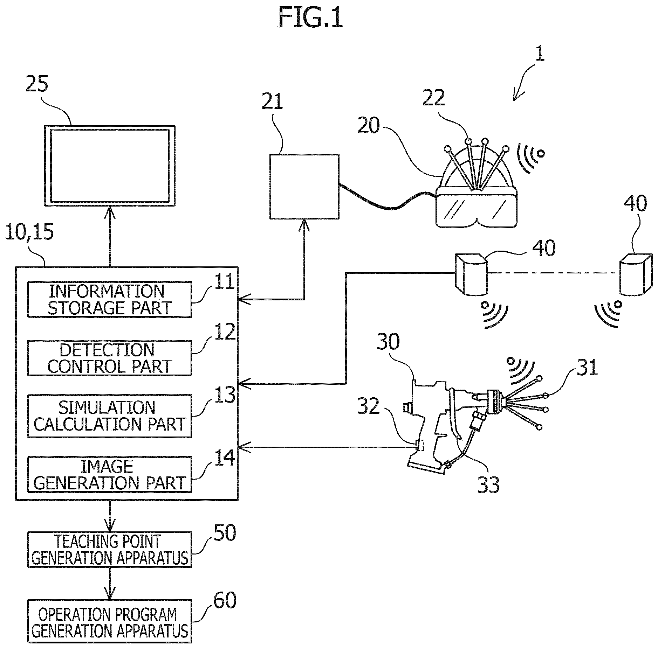

Hereinafter, a painting robot operation program generation system, a painting robot operation program generation method, and a teaching point generation apparatus according to an embodiment of the present invention are described in detail with reference to the drawings. Figure 1 is a schematic diagram showing the entire configuration of the painting robot operation program generation system according to the embodiment of the present invention. The painting robot operation program generation system according to the present embodiment generates an operation program through software of a computer for applying offline teaching to a painting robot that performs automatic painting. The teaching point generation apparatus is for generating teaching points for allowing a painting robot to operate.

As shown in Figure 1, a painting robot operation program generation system 1 according to the embodiment includes: a painting simulation apparatus 10 configured to allow a user to perform a painting operation using a three-dimensional virtual paint target object arranged in a virtual space; a teaching point generation apparatus 50 that generates teaching points based on log data pertaining to a pseudo (virtual) painting operation in the virtual space; and an operation program generation apparatus 60 that generates an operation program for teaching an operation of a painting robot. Here, the teaching points are information serving as target positions where the robot passes when the robot is operated. Note that the virtual space may include a virtual three-dimensional space formed as VR (Virtual Reality), AR (Augmented Reality) or MR (Mixed Reality). In the following, an explanation is made based on an example in which a VR space formed by VR (Virtual Reality) is used as a virtual space.

The painting simulation apparatus 10 includes: a simulation control apparatus 15; a head-mounted display (HMD) 20 worn by the user; a pseudo painting tool 30 manually operated by the user for performing pseudo painting on a virtual paint target object; and an operation detection apparatus 40 that detects an operation of the pseudo painting tool 30.

The HMD 20 is connected to the simulation control apparatus 15 via a link box 21, and is configured to display a three-dimensional image of the virtual paint target object in the virtual space, in accordance with a signal from the simulation control apparatus 15. The HMD 20 includes a display for the right eye (not shown) that provides an image for the right eye of the user, and a display for the left eye (not shown) that provides an image for the left eye of the user. Images having difference in angle of view corresponding to parallax are displayed respectively on the display for the right eye and the display for the left eye, thus allowing the user to recognize the virtual paint target object in the virtual space as a three-dimensional image. An optical marker 22 detectable by the operation detection apparatus 40 for detecting the position and attitude (posture, orientation) in view of the user is attached to the HMD 20.

The pseudo painting tool 30 is configured of a paint gun actually usable for spray painting, for example. The pseudo painting tool 30 includes a trigger 33 that is operated by a hand of the user for performing a painting simulation in the virtual space. An optical marker 31 detectable by the operation detection apparatus 40 for measuring the operation of the pseudo painting tool 30 is attached to the pseudo painting tool 30. The optical marker 31 is attached to a distal end of a discharge port of the pseudo painting tool 30 corresponding to a tool center point (TCP) of the painting robot such that the position and attitude of the pseudo painting tool 30 can be detected.

The pseudo painting tool 30 further includes a sensor 32 that detects on/off of pseudo painting by the operation on the trigger 33. For example, in accordance with the ON/OFF operation on the trigger 33 of the pseudo painting tool 30 by the user, the sensor 32 outputs signals indicating an on state in which painting is in operation and an off state in which painting is not performed, to the simulation control apparatus 15. Note that a paint pattern of virtual paint that is sprayed through the discharge port of the pseudo painting tool 30 and is applied onto the virtual paint target object emulates a circular application pattern centered on the central axis of the discharge port of paint, corresponding to a rotational atomization bell paint machine or paint gun, such as of a round nozzle, which is attached to the painting robot.

The operation detection apparatus 40 includes, for example, a plurality of optical sensors. The optical sensors transmit measurement results of the optical marker 22 of the HMD 20 and the optical marker 31 of the pseudo painting tool 30, to the simulation control apparatus 15. Note that the operation detection apparatus 40 may detect the position and attitude of the visual point of the user and the position and attitude of the pseudo painting tool 30, using sensors other than the optical sensors, such as a magnetic sensor, an ultrasonic sensor and the like, for example.

The simulation control apparatus 15 is implemented as, for example, a computer including: a CPU (central processing unit) that performs arithmetic processing; a RAM (random-access memory) as a work area of the CPU and a temporary storage area of calculation results; a ROM (read-only memory) that stores operation programs for executing a simulation, various control constants, maps, etc.; a hard disk device; an input interface; an output interface; and others. The simulation control apparatus 15 includes an information storage part 11, a detection control part 12, a simulation calculation part 13, and an image generation part 14.

The information storage part 11 stores an application pattern that represents the distribution of thicknesses of paint after a paint target object is painted by the pseudo painting tool 30. The application pattern represents the distribution of thicknesses of paint after paint is applied perpendicularly to a plane at a reference position at a predetermined distance from the pseudo painting tool 30. Note that since the application pattern is circular as described above, the thickness of paint is substantially uniformly distributed in the circumferential direction of the application pattern. The information storage part 11 stores application patterns corresponding to the discharge ports of various paint guns attachable to the painting robot. The information storage part 11 stores paint target object information, e.g., 3D CAD data, for displaying a paint target object that is a target of a painting simulation, as a three-dimensional image, in the virtual space. Note that it may be configured so that at least one of the application pattern and the paint target object information may be stored in an information storage part that is provided outside of the simulation control apparatus 15, and the simulation control apparatus 15 reads the application pattern and/or the paint target object information from the external information storage part.

The detection control part 12 controls the operation detection apparatus 40 to obtain position and attitude data on the optical marker 22 of the HMD 20 and the optical marker 31 of the pseudo painting tool 30 detected by the operation detection apparatus 40, and a signal indicating an ON/OFF operation for the trigger 33 of the pseudo painting tool 30 obtained from the sensor 32, at a predetermined time rate (e.g., 30 Hz).

The simulation calculation part 13 obtains log data pertaining to the operation of the pseudo painting tool 30 manually operated by the user, from a detection result of the operation detection apparatus 40 input into the detection control part 12, and stores the data in a memory (not shown). That is, the simulation calculation part 13 functions as a log data generation apparatus. Specifically, the simulation calculation part 13 calculates the position and attitude of the pseudo painting tool 30 corresponding to the TCP of the painting robot, i.e., the three-dimensional position (hereinafter called a TCP position) and the attitude of the discharge port of the pseudo painting tool 30, based on the measurement result of the optical marker 31 of the pseudo painting tool 30 by the operation detection apparatus 40. The TCP position of the pseudo painting tool 30 is represented as position data (X, Y, Z). The attitude of the pseudo painting tool 30 is represented as angle data (Rx, Ry, Rz) that is the Euler angles (yaw, pitch and roll) assuming that the central axis of the discharge port of the pseudo painting tool 30 is adopted as the Z axis. In the following description, the position data and the angle data on the pseudo painting tool 30 are collectively called coordinate data (X, Y, Z, Rx, Ry, Rz) or position and attitude data.

The simulation calculation part 13 calculates the film thickness of the paint target object through a painting simulation, based on the application pattern corresponding to the pseudo painting tool 30 and the paint target object information, which are stored in the information storage part 11, on a signal indicating on/off of painting by the pseudo painting tool 30, and on the coordinate data on the pseudo painting tool 30. For example, the film thickness can be obtained by calculating the thickness of paint applied by pseudo painting, from the distance between the virtual paint target object and the pseudo painting tool 30 in the virtual space, the position and attitude of the pseudo painting tool 30, a time period during which pseudo painting is performed, the application pattern and the like. The simulation calculation part 13 obtains the distribution of film thicknesses on the painting surface of the paint target object as film thickness data.

The simulation calculation part 13 generates log data that associates the calculated coordinate data on the pseudo painting tool 30, the film thickness data, and the paint on/off data by the operation on the trigger 33 of the pseudo painting tool 30, with the timestamp, and stores the log data in a memory (not shown). The coordinate data on the pseudo painting tool 30 is periodically extracted and recorded as log data.

The simulation calculation part 13 further calculates the position and attitude of the optical marker 22 based on the measurement result of the optical marker 22 of the HMD 20 by the operation detection apparatus 40, and converts the position and attitude of the optical marker 22 into the position and attitude of the visual point of the user based on the relative position and attitude relationship between the preliminarily obtained visual point of the user and the optical marker 22.

The image generation part (image generation apparatus) 14 generates a virtual paint target object based on the paint target object information stored in the information storage part 11 to arrange the object in the virtual space, and generates a three-dimensional image of the paint target object viewed from the visual point of the user based on the position and attitude information of the visual point of the user obtained by the simulation calculation part 13. The image generation part 14 generates a three-dimensional image representing a pseudo painting operation for the virtual paint target object, based on a simulation result of the simulation calculation part 13. That is, the image generation part 14 is configured to generate an image including the three-dimensional image of a virtual paint target object arranged in the virtual space, with the image representing pseudo painting with which virtual paint is applied onto the virtual paint target object through the pseudo painting tool 30 in the virtual space in accordance with an operation by the user for the pseudo painting tool 30.

When an ON operation is applied to the trigger 33 of the pseudo painting tool 30, the image generation part 14 generates images of virtual paint sprayed through the discharge port of the pseudo painting tool 30 and a virtually painted film applied onto the virtual paint target object, combines the images and displays the combined image on the HMD 20 in real time. The image generation part 14 displays the TCP position of the pseudo painting tool 30 as a red circle, for example, and displays the virtual paint sprayed through the discharge port of the pseudo painting tool 30 as a conical shape, for example. A part of the virtual paint target object to which paint is applied in a simulated manner by the pseudo painting tool 30 is colored with a density and coloration depending on the distribution of the film thicknesses due to the pseudo painting.

The three-dimensional image (parallax image set) generated by the image generation part 14 is transmitted through the link box 21 to the HMD 20 and is displayed in real time. Accordingly, the user can perform pseudo painting on the virtual paint target object while observing the three-dimensional images depending on the position and attitude from the user's viewpoint. The three-dimensional image generated by the image generation part 14 may be optionally displayed on an external monitor 25.

Next, the teaching point generation apparatus 50 that generates teaching points is described. The teaching point generation apparatus 50 is implemented as, for example, a computer that includes a CPU that performs arithmetic processing, a RAM serving as a work area of the CPU and a temporary storage area of calculation results, a ROM that stores an operation program for executing the processes, various control constants, maps and the like, a hard disk device, an input interface, an output interface and the like.

The teaching point generation apparatus 50 obtains log data on the painting operation from the painting simulation apparatus 10. The log data on the painting operation is obtained by recording the coordinate data on the pseudo painting tool 30, the film thickness data and the paint on/off data in association with the timestamp as described above. Note that the teaching point generation apparatus 50 performs coordinate conversion calculation for the coordinate data on the pseudo painting tool 30 obtained from the painting simulation apparatus 10 so as to be compatible with software for offline teaching used by the operation program generation apparatus 60 described later, as required. The teaching point generation apparatus 50 performs discretization calculation (decimation or thinning process) for the log data, and generates teaching points corresponding to the log data after the discretization calculation. The details of the discretization calculation in the teaching point generation apparatus 50 are described later.

The operation program generation apparatus 60 is implemented as, for example, a computer that includes a CPU that performs arithmetic processing, a RAM serving as a work area of the CPU and a temporary storage area of calculation results, a ROM that stores an operation program for executing the processes, various control constants, maps and the like, a hard disk device, an input interface, an output interface and the like.

Software for offline teaching is installed in the operation program generation apparatus 60, which generates the operation program for teaching the operation of the painting robot, based on the teaching points generated by the teaching point generation apparatus 50. Publicly known teaching software that is not limited to a robot language of a specific robot maker can be used as software for offline teaching. Use of the teaching software that is not limited to a robot language of a specific robot maker allows the teaching points generated according to the present embodiment to be used with any type of a robot main body, robot control part and parameters. Note that the teaching points may be generated so as to support a robot language of a specific robot maker.

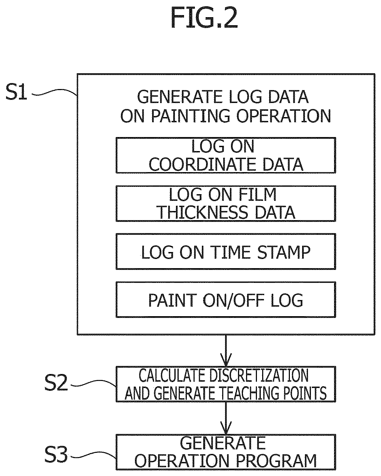

Figure 2 shows an overview of the processes of the operation program generation system 1 shown in Figure 1. First, the operation program generation system 1 according to the present embodiment causes the painting simulation apparatus 10 to measure the painting operation of the pseudo painting tool 30 by the user in the virtual space and to generate log data on the painting operation (S1). Next, the teaching point generation apparatus 50 performs discretization calculation for the log data on the painting operation obtained by the painting simulation apparatus 10, and generates teaching points corresponding to the log data after the discretization calculation (S2). The operation program generation apparatus 60 then generates an operation program for teaching the operation of the painting robot, based on the generated teaching points (S3).

As described above, the painting robot operation program generation system 1 according to the present embodiment generates the operation program of the painting robot used for offline teaching. Offline teaching can simulate the operation of the painting robot on the computer. Accordingly, in comparison with direct teaching that performs teaching by operating the robot main body using a teaching pendant, offline teaching has an advantage of negating the need to actually prepare a paint target object serving as a target of painting, a painting device, a jig and the like.

However, in conventional offline teaching, after roughly performing teaching through a simulation in a CAD space, direct teaching needs to be performed on site by operating the robot main body so as to perform problem extraction and program correction. That is, when a desired operation program cannot be completed only through offline teaching, a paint target object, a painting device, a jig and the like are required to be actually prepared and correction is required to be performed in order to complete a highly accurate operation program.

In spray painting using a paint gun, the thickness of paint applied onto a paint target object varies depending on paint conditions, such as the moving speed of the paint gun, and the distance and angle between the paint gun and the paint target object. Typically, a paint operator performs the operation while changing the moving speed of the paint gun in consideration of the surface shape of the paint target object and the shape of a jig therearound in order to achieve a desired film thickness. Consequently, if the operation program is generated with a focus only on the reproducibility of the operation trajectory of the paint gun without consideration of the moving speed, there is a possibility that a desired paint film thickness cannot be reproduced.

The painting robot operation program generation system 1 according to the present embodiment performs a painting simulation in a virtual space using the painting simulation apparatus 10 that includes the pseudo painting tool 30 manually operated by the user, and performs a decimation process described later, for the log data of the painting operation. Accordingly, the operation program for offline teaching is generated so as to reproduce the operation trajectory that can form a desired paint film thickness.

Hereinafter, details of the decimation process through the teaching point generation apparatus 50 are described. As described above, the teaching points are information serving as target positions when the painting robot is operated. The greater the number of teaching points is, the more accurately the operation trajectory by the user can be traced. Accordingly, the reproducibility is high. However, the wiggling and peculiarity of user's operation may also be reproduced. Furthermore, the operation program with many teaching points may possibly affect and overload the arithmetic processing capability of the robot control part. Accordingly, a communication delay may occur between the robot control part and the painting robot main body. On the other hand, the operation program with a small number of teaching points has a small load on the arithmetic processing of the robot control part, but the distances between the teaching points are long, which reduces the reproducibility of the operation trajectory of the user. In this case, the moving speeds between the teaching points are averaged, and the average moving speed does not reflect the moving speed of the paint gun by the user so that the reproducibility of the paint film thickness may be decreased.

In the present embodiment, a discretization calculation using a Ramer-Douglas-Peucker (RDP) algorithm is performed as a decimation process for the coordinate data (X, Y, Z, Rx, Ry, Rz) on the pseudo painting tool 30, and coordinate data determined to be necessary is adopted as teaching points. Furthermore, discretization calculation is performed for the coordinate data on the pseudo painting tool 30 using a threshold dynamically set depending on the moving speed of the pseudo painting tool 30, and coordinate data determined to be necessary is adopted as teaching points.

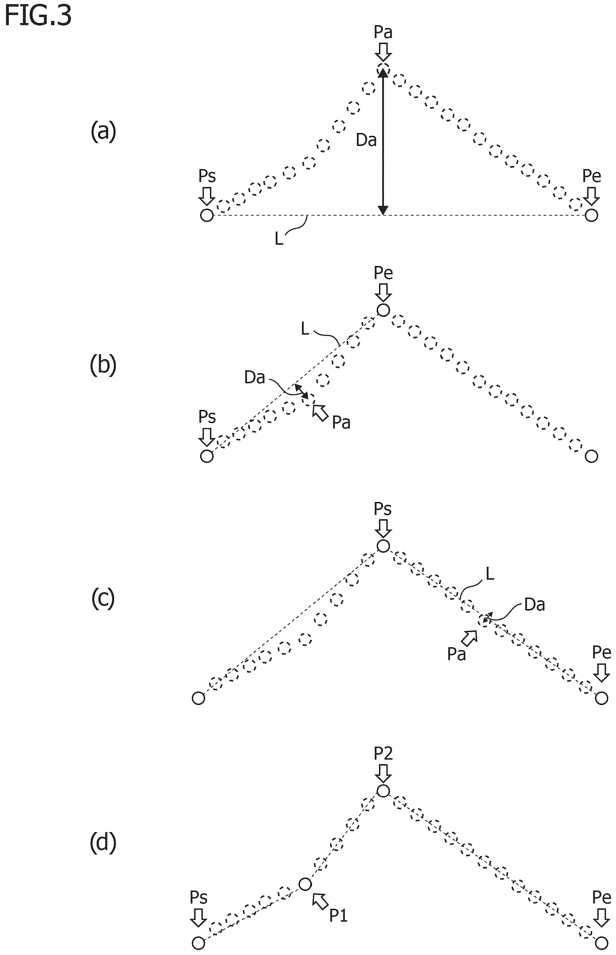

First, referring to Figures 3(a) to 3(d), the discretization calculation using the RDP algorithm for the coordinate data (X, Y, Z, Rx, Ry, Rz) of the pseudo painting tool 30 is described. Figures 3(a) to 3(d) conceptually show the temporal change in coordinate data included in the log data on the pseudo painting tool 30 obtained by the painting simulation apparatus 10. Points shown by solid-line circles and broken-line circles represent the TCP positions in the X-axis direction, for example.

An overview of the discretization calculation using the RDP algorithm is as follows. As shown in Figure 3(a), a start point Ps and an end point Pe of the operation trajectory are connected by a line L, and a point Pa farthest from the line L is selected. When the distance Da to the point Pa farthest from the line L is equal to or greater than a preset threshold ε, the point Pa is determined to be necessary (valid). When the distance is less than the threshold ε, the point Pa is determined to be unnecessary (invalid). The process is repeatedly executed, and only the coordinate data determined to be necessary is adopted as teaching points. By changing the value of the threshold ε, the degree of decimating or thinning the coordinate data, i.e., how exactly the operation trajectory of the pseudo painting tool 30 is reproduced (traced), can be adjusted. Setting of the threshold ε is described later.

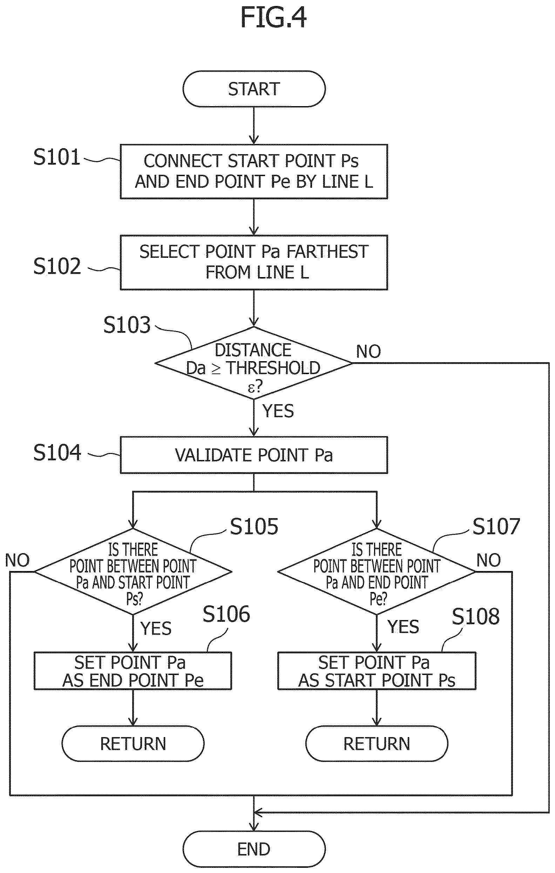

Hereinafter, referring to a flowchart of Figure 4, the flow of the discretization calculation using the RDP algorithm is described.

First, in step S101, as shown in Figure 3(a), the start point Ps and the end point Pe are connected by the line L. In step S102, for every point between the start point Ps and the end point Pe, the distance from the line L in the direction orthogonal to the line L is calculated, and the point Pa having the largest distance from the line L is selected. In step S103, it is determined whether the distance Da from the line L to the point Pa is equal to or greater than the threshold ε or not. When the distance Da is equal to or greater than the threshold ε, the processing proceeds to step S104, and the point Pa is determined as a valid point. On the other hand, when the distance Da is less than the threshold ε, the point Pa is determined to be an invalid point, and the processing is terminated.

The processing after determination of the point Pa as a valid point in step S104 is branched to step S105 and step S107. In step S105, it is determined whether or not a point exists between the point Pa determined to be valid in step S104 and the start point Ps. As shown in Figure 3(a), when a point exists between the valid point Pa and the start point Ps, the processing proceeds to step S106. When no point exists between the valid point Pa and the start point Ps, the processing is terminated.

In step S106, the valid point Pa is set as the end point Pe, and the processing returns to step S101 so as to repeat the processes described above. Specifically, as shown in Figure 3(b), the start point Ps and the valid point Pa set as the end point Pe are connected by the line L (step S101), and the point Pa farthest from the line L is selected (step S102). It is determined whether the distance Da from the line L to the point Pa is equal to or greater than the threshold ε or not (step S103). When the distance Da is equal to or greater than the threshold ε, the point Pa is determined to be a valid point (step S104). When the distance Da is less than the threshold ε, the point Pa is determined to be an invalid point and the processing is terminated.

On the other hand, in step S107, it is determined whether or not a point exists between the point Pa determined to be valid in step S104 and the end point Pe. As shown in Figure 3(a), when a point exists between the valid point Pa and the end point Pe, the processing proceeds to step S108. When no point exists between the valid point Pa and the end point Pe, the processing is terminated.

In step S108, the valid point Pa is set as the start point Ps, and the processing returns to step S101 so as to repeat the processes described above. Specifically, as shown in Figure 3(c), the valid point Pa set as the start point Ps and the end point Pe are connected by the line L (step S101), and the point Pa farthest from the line L is selected (step S102). It is determined whether the distance Da from the line L to the point Pa is equal to or greater than the threshold ε or not (step S103). When the distance Da is equal to or greater than the threshold ε, the point Pa is determined to be a valid point (step S104). When the distance Da is less than the threshold ε, the point Pa is determined to be an invalid point and the processing is terminated.

The processing shown in the flowchart of Figure 4 is finished after determination of whether to be valid or invalid is completed for all the points Pa determined to have a greatest distance from the line L in step S 102 among all the points existing between the start point Ps and the end point Pe at the time of start of the processing. Figure 3(d) shows a result of the discretization calculation for the coordinate data in Figure 3(a). Figure 3(d) shows an example in which a point P1 and a point P2 are determined to be valid among the points between the start point Ps and the end point Pe, and the other points are determined to be invalid. The teaching point generation apparatus 50 adopts only the start point Ps, the end point Pe and the valid points P1 and P2 as teaching points, and does not use the other points as teaching points and removes these points.

The teaching point generation apparatus 50 performs the discretization calculation described above for each of five coordinate data items in the coordinate data (X, Y, Z, Rx, Ry, Rz) of the pseudo painting tool 30, except Rz representing the roll angle of the discharge port about the central axis (Z axis). As described above, the pseudo painting tool 30 is configured to form, in a simulated manner, the circular application pattern centered on the central axis of the discharge port of the pseudo painting tool 30, and the roll angle Rz about the central axis of the discharge port does not affect the application pattern. Accordingly, the roll angle Rz is excluded from the discretization calculation.

Next, setting of the threshold ε used for the discretization calculation using the RDP algorithm is described. As described above, the reproducibility of the operation trajectory of the pseudo painting tool 30 and the number of teaching points have a trade-off relationship. The more numerous the teaching points, the higher the reproducibility of the operation trajectory. The fewer the teaching points, the lower the reproducibility; and the deviation from the operation trajectory is great. That is, the lower the degree of decimating (removing) the invalid points from the coordinate data through the discretization calculation, the more numerous the teaching points; and the reproducibility of the operation trajectory is high. On the other hand, the higher the degree of decimation from the coordinate data, the fewer the teaching points; and the reproducibility of the operation trajectory is low. In the following description, the degree of decimation of the invalid points from the coordinate data of the pseudo painting tool 30 obtained from the painting simulation apparatus 10 may be referred to as a decimation rate or a discretization rate, and the reproducibility of the operation trajectory may be referred to as a trace rate. The decimation rate is a rate of invalid points to the coordinate data of the pseudo painting tool 30.

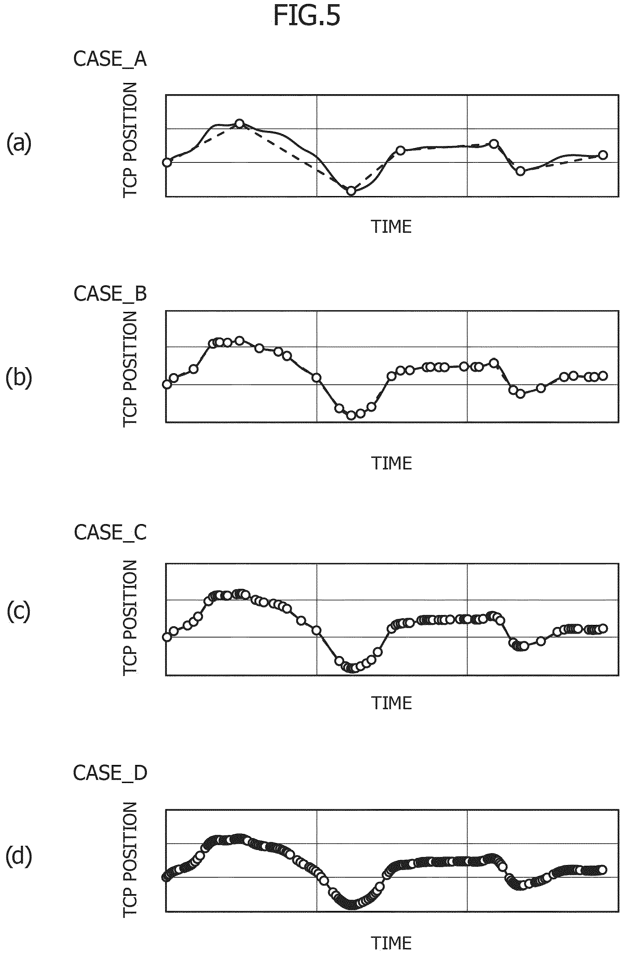

The reproducibility of the operation trajectory can be adjusted depending on the threshold ε. Results of the discretization calculation using different thresholds ε are described with reference to Figures 5 to 7. The abscissa axes of Figures 5(a) to 5(d) represent the time, and the ordinate axes represent the TCP position in the X-axis direction, for example, thus indicating the operation trajectories of the pseudo painting tool 30 and paths connecting the teaching points. Note that CASE_A to CASE_D shown in Figures 5 to 7 are examples used for intelligibly illustrating the difference between the discretization calculations in cases of using different thresholds ε. A result of an actual discretization calculation can be different from the illustrated results.

As for the magnitude of the threshold ε, the threshold ε in CASE_A shown in Figure 5(a) is the largest, the threshold ε in CASE_B shown in Figure 5(b) is the second largest, the threshold ε in CASE_C shown in Figure 5(c) is the third largest, and the threshold ε in CASE_D shown in Figure 5(d) is the smallest. The CASE_A shown in Figure 5(a) is a case in which the threshold ε is the largest and the decimation rate is the highest such that the number of teaching points indicated by circles is small. Consequently, from the operation trajectory of the pseudo painting tool 30 indicated by a solid line, the path formed by connecting teaching points indicated by a broken line largely deviates. As shown in Figures 5(b) to 5(d), as the threshold ε becomes smaller, the decimation rate is reduced, such that the number of teaching points indicated by circles becomes greater and the reproducibility of the operation trajectory becomes higher.

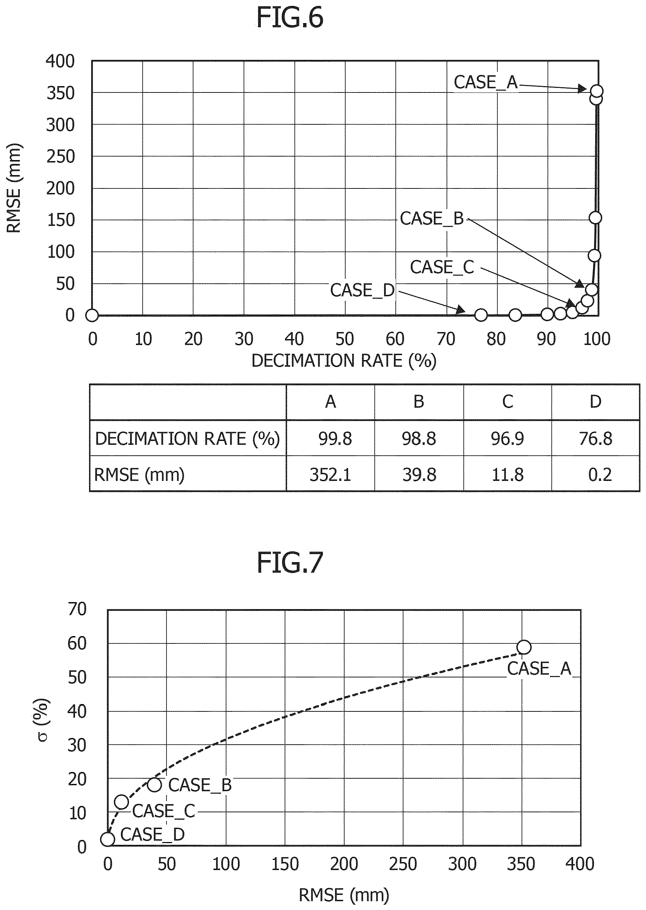

Figure 6 shows the relationship between the reproducibility of the operation trajectory of the pseudo painting tool 30 and the decimation rate of coordinate data. The abscissa axis in Figure 6 indicates the decimation rate (%) from the coordinate data, and the ordinate axis indicates the reproducibility of the operation trajectory. Here, as the indicator representing the reproducibility of the operation trajectory, the root mean squared error RMSE (mm) is used. The RMSE of the operation trajectory can be calculated by the following Expression (1).
[Math. 1] $RMSE = \sqrt{\frac{1}{n} {\sum }_{i = 1}^{n} {\left(fi-yi\right)}^{2}}$ In (Expression 1), n is the number of coordinate data items, fi is the i-th value of the operation trajectory (coordinate data) before the discretization calculation, and yi is the i-th value of the path (teaching points) after the discretization calculation.

As the value of RMSE of the operation trajectory is small, it is indicated that the error of the path after the discretization calculation from the operation trajectory before the discretization calculation is small, and the reproducibility of the operation trajectory, i.e., the trace rate, is high. As shown in Figure 6, in CASE_A, the decimation rate is the highest (99.8%), and the RMSE of the operation trajectory is the largest (352.1 mm). Consequently, the reproducibility of the operation trajectory is the lowest. In the order of CASE_B, CASE_C and CASE_D, the decimation rate becomes smaller such that 98.8%, 96.9% and 76.8%, and the RMSE of the operation trajectory becomes smaller such that 39.8 mm, 11.8 mm and 0.2 mm. Accordingly, the reproducibility of the operation trajectory becomes high.

The degree of the RMSE of the operation trajectory, i.e., the reproducibility of the operation trajectory can be determined, taking into consideration various factors, based on the film thickness distribution of the paint target object, for example. Specifically, from the film thickness data before the discretization calculation at a plurality of measurement points and the film thickness data after the discretization calculation, the root mean squared error RMSE (µm) of the film thickness calculated using an expression equivalent to the (Expression 1) described above is used. Note that in this case, n is the number of film thickness data items, fi is the i-th value of the film thickness coordinate data item before the discretization calculation, and yi is the i-th value of the film thickness data item after the discretization calculation.

Figure 7 shows the relationship between the reproducibility of the operation trajectory of the pseudo painting tool 30 and the standard deviation between film thickness errors before and after the discretization calculation. The abscissa axis of Figure 7 indicates the RMSE of the operation trajectory, and the ordinate axis indicates the standard deviation *σ* of the RMSE (film thickness error) of the film thickness. In Figure 7, the standard deviation *σ* of the film thickness error is indicated by the ratio (%) of the film thickness error to the average film thickness of the paint target object.

As shown in Figure 7, in the order of CASE_A, CASE_B, CASE_C and CASE_D, the RMSE of the operation trajectory becomes small, and the standard deviation σ of the film thickness errors becomes small accordingly. It is preferable that the standard deviations σ of the film thickness error before and after the discretization calculation be, for example, about 20% or less, and it is more preferable that the deviations be about 15% or less. According to the relationship shown in Figure 7, in a case of the standard deviation σ of the film thickness error = 20%, the RMSE of the operation trajectory is about 40 mm. In a case of the standard deviation σ of the film thickness error = 15%, the RMSE of the operation trajectory is about 15 mm. Consequently, it is preferable that the RMSE of the operation trajectory be equal to or less than 15 mm, which corresponds to the standard deviation σ of the film thickness error = 15%. Even when the decimation rate is about 98% so that about 98% of the coordinate data is removed by the discretization calculation, the film thickness errors before and after the discretization calculation can fall within 20%. When about 97% of the coordinate data is removed by the discretization calculation, the film thickness errors before and after the discretization calculation can fall within 15%.

As described above, among CASE_A, CASE_B, CASE_C and CASE_D, CASE_B, CASE_C or CASE_D in which the standard deviation σ of the film thickness error is about 20% or less is preferable, and CASE_C or CASE_D in which the standard deviation σ of the film thickness error is about 15% or less is more preferable. By appropriately setting the threshold ε in consideration of the reproducibility (trace rate) of the operation trajectory and the decimation rate described above, a desired operation path and film thickness can be achieved.

Next, the discretization calculation using the moving speed of the pseudo painting tool 30 is described. The moving speed (paint speed) of the pseudo painting tool 30 and the film thickness has a proportional relationship. When the moving speed increases by 10%, the film thickness decreases by 10%. When the moving speed decreases by 10%, the film thickness increases by 10%. Consequently, if the decimation process is performed without consideration of the change in moving speed and only in consideration of the reproducibility of the operation trajectory, there is a possibility that a desired film thickness cannot be obtained. In the present embodiment, by performing the discretization calculation using the threshold α which is dynamically set depending on the moving speed of the pseudo painting tool 30, the coordinate data determined to be necessary is adopted as teaching points.

The log data on the pseudo painting tool 30 obtained from the painting simulation apparatus 10 includes position data and timestamps. The moving speed of the pseudo painting tool 30 can be calculated from position data at each TCP position and the timestamp. Accordingly, it is understood that the log data on the pseudo painting tool 30 includes log data about the moving speed. The teaching point generation apparatus 50 calculates the moving speed at each TCP position from the position data of the pseudo painting tool 30 and the timestamp obtained from the painting simulation apparatus 10. As described above, it is preferable that the standard deviation of the film thickness errors before and after the discretization calculation be within 20%, and it is more preferable that standard deviation be within 15%. Accordingly, it is preferable that the difference between acceleration rates of the pseudo painting tool 30 be within 20%, and it is more preferable that the difference be within 15%.

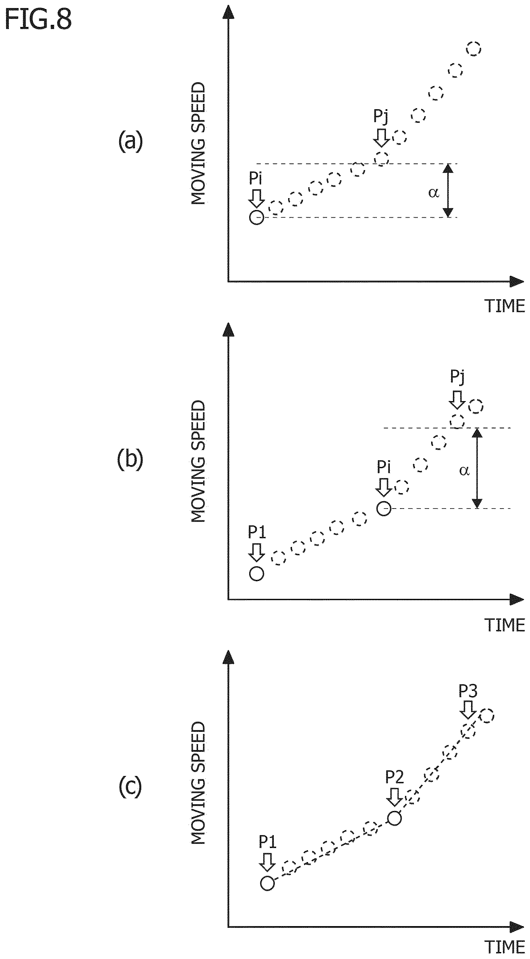

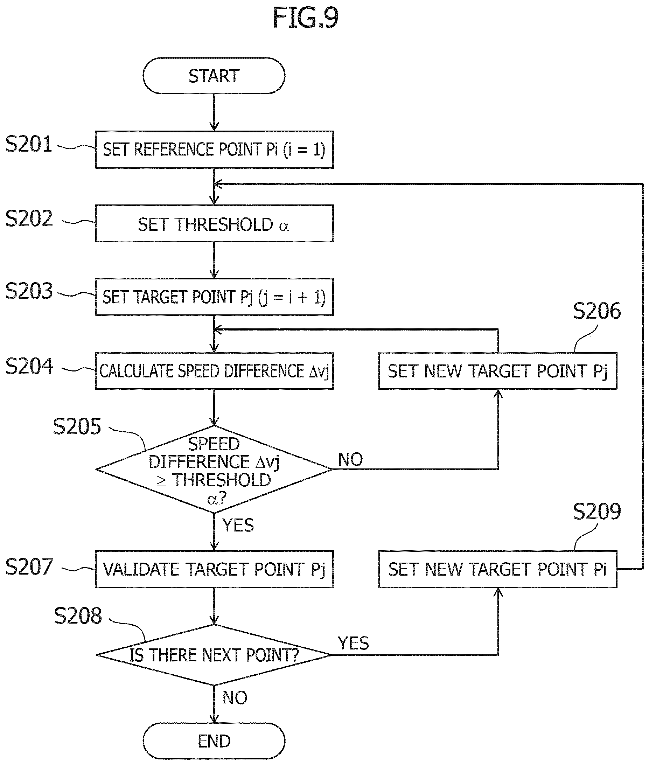

Figures 8(a) to 8(c) are diagrams illustrating the discretization calculation using the moving speed of the pseudo painting tool 30. Figures 8(a) to 8(c) show the temporal change in the moving speed at each TCP position of the pseudo painting tool 30. Points indicated solid-line circles or by broken-line circles represent the moving speed at each TCP position. Hereinafter, referring to Figure 9, the flow of the discretization calculation using the moving speed of the pseudo painting tool 30 is described.

First, in step S201, as shown in Figure 8(a), the TCP position at the first time point ti is set as a reference point Pi (i = 1). In step S202, the threshold α is set based on the moving speed vi of the pseudo painting tool 30 at the reference point Pi. Specifically, the threshold α is calculated using the moving speed vi and a predetermined coefficient β (α = β × vi). Here, the coefficient β is appropriately set in accordance with an obtained accuracy in advance, and is set so that the greater the moving speed of the pseudo painting tool 30 is, the greater the threshold α is. The coefficient β can be set to 0.2 (β = 0.2), for example. In step S203, a target point Pj is set. The target point Pj is the TCP position at the time point tj. Here, the point is (i + 1)-th point with reference to the reference point Pi.

In step S204, the absolute value Δvj of the speed difference between the moving speed vi at the reference point Pi and the moving speed vj at the target point Pj is calculated (Δvj = |vj - vi|). In step S205, it is determined whether or not the absolute value Δvj of the speed difference is equal to or greater than the threshold α set in step S202. When the absolute value Δvj of the speed difference is less than the threshold α, the processing proceeds to step S206, in which the target point Pj is determined as an invalid point, and a new target point Pj is set. Specifically, the next point of the current target point Pj, i.e., the (j + 1)-th point, is set as a new target point Pj. After the new target point Pj is set, the processing returns to step S204, in which the absolute value Δvj of the speed difference is calculated using the moving speed vj at the new target point Pj.

On the other hand, when the absolute value Δvj of the speed difference is determined to be equal to or greater than the threshold α in step S205, the processing proceeds to step S207, in which the target point Pj is determined as a valid point. Accordingly, as shown in Figure 8(a), the target point Pj at which the speed difference from the moving speed vi at the reference point Pi is equal to or greater than the threshold α based on the moving speed vi at the reference point Pi is determined as a valid point.

In subsequent step S208, it is determined whether a next point of the target point Pj validated in step S207 exists or not. If the TCP position at the next time point of the target point Pj exists, the processing proceeds to step S209, in which the target point Pj is set as a new reference point Pi. After the new reference point Pi is set, the processing returns to step S202, and the processes described above are repeated. That is, as shown in Figure 8(b), the threshold α is set based on the moving speed vi at the new reference point Pi, and it is determined whether the new target point Pj is valid or invalid based on the set threshold α.

In step S208, if it is determined that a next point of the target point Pj validated in step S207 does not exist, the processing is terminated. Figure 8(c) shows a result of the discretization calculation using the moving speed at each TCP position of the pseudo painting tool 30 shown in Figure 8(a). Figure 8(c) shows an example in which three points P1, P2 and P3 indicated by solid circles are determined to be valid, and the other points indicated by broken-line circles are determined to be invalid. The teaching point generation apparatus 50 adopts three valid points P1, P2 and P3 including the point P1 at the first time point, and removes the other points without using them as teaching points.

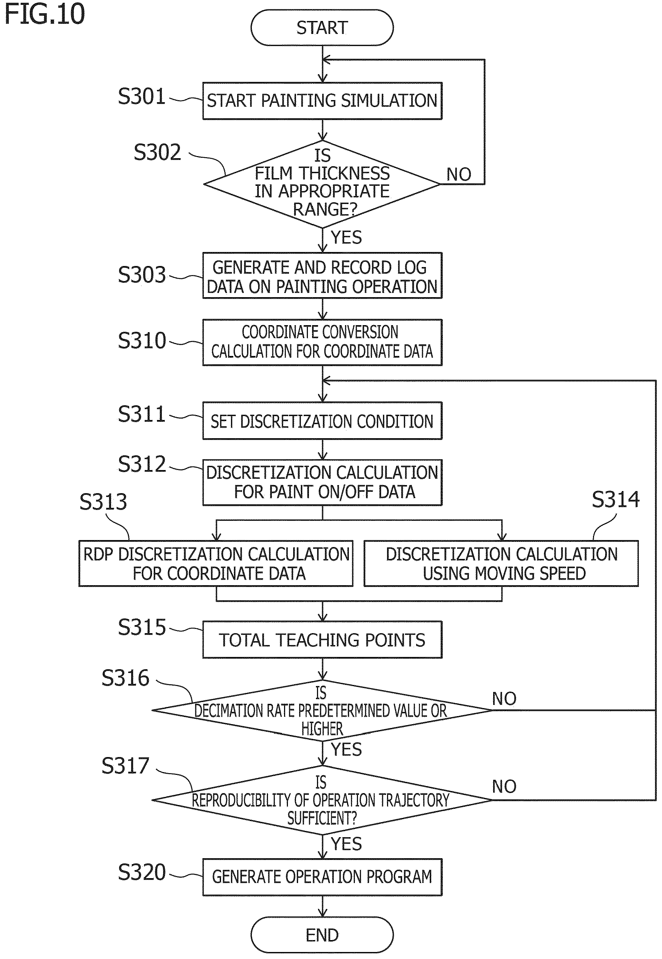

The processes in each of the apparatuses constituting the painting robot operation program generation system 1 according to the present embodiment are thus described above. Next, the operation program generation method by the painting robot operation program generation system 1 is described with reference to the flowchart of Figure 10.

First, in step S301, a painting simulation for a virtual paint target object in a virtual space is started by the painting simulation apparatus 10. The painting simulation is started in response to an ON operation on the trigger 33 of the pseudo painting tool 30 by the user. In step S302, the painting simulation apparatus 10 determines whether the film thickness of the paint target object obtained by pseudo painting by the pseudo painting tool 30 is in an appropriate range or not. As described above, the painting simulation apparatus 10 calculates the film thickness of the paint target object by a pseudo painting operation, and determines whether the film thickness obtained in the simulated manner is in the preset appropriate range or not. When the film thickness is in the appropriate range, the processing proceeds to step S303. On the other hand, when the film thickness is not in the appropriate range, it is determined that a desired film thickness is not obtained by the painting operation by the pseudo painting tool 30, and the processing returns to step S301. That is, until the desired film thickness is obtained, the painting simulation by the pseudo painting tool 30 is performed again.

In step S303, the painting simulation apparatus 10 generates and records the log data on the pseudo painting tool 30 as described above. Note that the data format of the log data on the pseudo painting tool 30 generated and recorded by the painting simulation apparatus 10 is configured as a data format usable by software for offline teaching used by the operation program generation apparatus 60. Steps S301 to S303 described above are processes executed by the painting simulation apparatus 10.

In step S310, the teaching point generation apparatus 50 obtains the log data on the pseudo painting tool 30 obtained in step S303. The teaching point generation apparatus 50 optionally performs coordinate conversion calculation for the coordinate data on the pseudo painting tool 30, as required, so as to be allowed to be used by software for offline teaching used by the operation program generation apparatus 60.

In step S311, the teaching point generation apparatus 50 sets the discretization condition (decimation condition for the decimation process) for performing the discretization calculation for the log data on the pseudo painting tool 30. Specifically, the threshold ε for the discretization calculation using the RDP algorithm for the coordinate data on the pseudo painting tool 30, and the threshold α for performing the discretization calculation using the moving speed of the pseudo painting tool 30 are set. As described above, as the threshold ε and the threshold α, appropriate values for allowing the desired operation path and film thickness to be achieved are set in consideration of the reproducibility (trace rate) of the operation trajectory and the decimation rate. Note that the threshold ε and the threshold α may be changed depending on the type of the paint gun attached to the painting robot, the type of the paint target object and the like, or may have fixed values.

In step S312, the teaching point generation apparatus 50 performs the discretization calculation (decimation process) for paint ON/OFF data in the log data on the pseudo painting tool 30. Specifically, coordinate data corresponding to the off state in which the pseudo painting tool 30 does not perform painting is removed. Subsequent processes are branched to step S313 and step S314.

In step S313, the teaching point generation apparatus 50 performs the discretization calculation using the RDP algorithm for the coordinate data on the pseudo painting tool 30 as described above. In step S314, the discretization calculation using the moving speed of the pseudo painting tool 30 is performed as described above. Note that the flowchart of Figure 10 shows step S313 and step S314 in a branched manner in order to represent the processes in step S313 and step S314 using the same log data. For the processes in step S313 and step S314, one of processes may be performed before the other process, or both the processes may be performed at the same time.

In step S315, the teaching point generation apparatus 50 totals the teaching points generated by the discretization calculation in step S313, and the teaching points generated by the discretization calculation in step S314. For example, even a point determined to be invalid by the discretization calculation using the RDP algorithm is adopted as a teaching point if the point is determined to be valid by the discretization calculation using the moving speed. Even a point determined to be invalid by the discretization calculation using the moving speed is adopted as a teaching point if the point is determined to be valid by the discretization calculation using the RDP algorithm.

In step S316, the teaching point generation apparatus 50 determines whether or not the decimation rate of the teaching point totaled in step S315 is equal to or greater than a predetermined value. The predetermined value of the decimation rate can be appropriately set in consideration of the arithmetic load and the like on the robot control part. Here, for example, the predetermined value is set to 50%. If the decimation rate is 50% or greater, the processing proceeds to step S317. If the decimation rate is less than 50%, the processing returns to step S311, in which the discretization condition is reset so that the decimation rate reaches 50% or higher.

In step S317, the teaching point generation apparatus 50 determines whether or not the operation path obtained by the teaching points totaled in step S315 can sufficiently reproduce the operation trajectory by the user. That is, it is determined whether the reproducibility of the operation trajectory is sufficiently high. The reproducibility of the operation trajectory can be determined, for example, using the RMSE of the operation trajectory described above. When the RMSE of the operation trajectory is, for example, 40 mm or less, it is determined that the reproducibility is sufficiently high. When the reproducibility is low, the processing returns to step S311, in which the discretization condition is reset so that the reproducibility becomes sufficiently high. When it is determined that the reproducibility is sufficiently high, the processing proceeds to step S320. Steps S310 to S317 described above are processes executed by the teaching point generation apparatus 50.

In step S320, the operation program generation apparatus 60 generates the operation program for teaching the operation of the painting robot, based on the teaching points that have been generated by the teaching point generation apparatus 50 through sufficient decimation, and have high reproducibility of the operation trajectory. Note that the operation program generation apparatus 60 verifies whether the painting robot is properly operated or not by the generated operation program, before transferring the generated operation program to the painting robot. Thus, the operation program generation process by the painting robot operation program generation system 1 is terminated.

In the painting robot operation program generation system 1 according to the embodiment described above, the following operational effects can be obtained.

The painting robot operation program generation system 1 includes: the painting simulation apparatus 10 for performing pseudo painting in a virtual space, including the pseudo painting tool 30 that includes the trigger 33 operated by a hand of a user to perform pseudo painting in the virtual space, the image generation part 14 that is configured to generate an image representing pseudo painting applying virtual paint onto a virtual paint target object through the pseudo painting tool 30 in the virtual space in accordance with an operation by the user for the pseudo painting tool 30, the image including a three-dimensional image of the virtual paint target object arranged in the virtual space, the HMD 20 that is worn by the user, and displays an image generated by the image generation part 14, the operation detection apparatus 40 that detects an operation of the pseudo painting tool 30 in the virtual space, and the simulation calculation part 13 that generates log data pertaining to the operation of the pseudo painting tool 30, from a detection result by the operation detection apparatus 40; the teaching point generation apparatus 50 that performs discretization calculation for the log data generated by the simulation calculation part 13, and generates teaching points corresponding to the log data after the discretization calculation; and the operation program generation apparatus 60 that generates an operation program for teaching an operation of the painting robot, based on the teaching points generated by the teaching point generation apparatus 50.

The painting robot operation program generation system 1 according to the present embodiment is configured to obtain log data pertaining to the operation of the pseudo painting tool 30 by the user through the painting simulation in the virtual space using the pseudo painting tool 30. The teaching points are generated from the log data on the painting operation by the user so as to generate the painting robot operation program. Accordingly, the operation program for offline teaching that can improve the reproducibility of the operation trajectory and the paint film thickness while improving the operation efficiency of the painting robot can be generated. The image representing pseudo painting that applies virtual paint onto the virtual paint target object by the pseudo painting tool 30 is displayed on the HMD 20 worn by the user. The user performs the painting operation while confirming the way of pseudo painting displayed on the HMD 20 in real time, in a manner of actually painting the virtual paint target object arranged in the virtual space with the pseudo painting tool 30 being held by a hand. Accordingly, log data can be obtained in conformity with the actual painting operation by the user, such as a skilled paint operator, for example. Accordingly, the operation program that can reproduce the operation trajectory of the painting operation by the skilled paint operator as the operation path of the painting robot can be generated. The painting simulation is performed in the virtual space. Accordingly, actual objects, such as a paint target object, a painting device and a jig, are not required to be prepared.

The painting simulation is performed with the three-dimensional virtual paint target object arranged in the virtual space. Accordingly, a simulation can be performed with the size of the paint target object being enlarged or reduced, and also, a simulation can be performed with the paint target object being vertically inverted. For example, by displaying the virtual paint target object with the reduced size, a painting simulation can be performed for a large paint target object, such as an automobile, a large piece of furniture, a large electric appliance, a large vessel, or an airplane. Furthermore, the paint target object having a complicated shape is enlarged and displayed as a virtual paint target object, which can simulate the painting operation for minute parts in detail. As described above, the painting simulation is performed using the virtual paint target object in the virtual space, which can obtain log data on the painting operation of the skilled paint operator for paint target objects having various sizes.

The log data pertaining to the operation of the pseudo painting tool 30 includes log data on the position of the pseudo painting tool 30 in pseudo painting. The teaching point generation apparatus 50 is configured to perform the discretization calculation using the Ramer-Douglas-Peucker (RDP) algorithm for the log data on the position. The log data pertaining to the operation of the pseudo painting tool 30 further includes log data on the attitude of the pseudo painting tool 30, i.e., angle data, in pseudo painting. The teaching point generation apparatus 50 is configured to further perform the discretization calculation using the RDP algorithm for the log data on the attitude. By performing the discretization calculation using the RDP algorithm, the operation trajectory of the user can be reproduced while removing coordinate data due to wiggling and an unnecessary motion by the user. In the discretization calculation using the RDP algorithm, it is determined whether the coordinate data is valid or invalid based on the distance from the line L connecting the start point Ps and the end point Pe, irrespective of the movement distance of the pseudo painting tool 30. Accordingly, coordinate data items having the same vectors are appropriately removed. The decimation rate of the coordinate data can be adjusted based only on the threshold ε. Accordingly, the process of deciding the degree of decimating the coordinate data, and the management process are facilitated.

The log data pertaining to the operation of the pseudo painting tool 30 includes log data on the position and log data pertaining to the moving speed of the pseudo painting tool 30 in pseudo painting. The teaching point generation apparatus 50 is configured to perform the discretization calculation for the log data on the position using the threshold α dynamically set depending on the moving speed. The log data pertaining to the operation of the pseudo painting tool 30 further includes log data on the attitude of the pseudo painting tool 30, i.e., angle data, in pseudo painting. The teaching point generation apparatus 50 is configured to further perform the discretization calculation for the log data on the attitude using the threshold α. The moving speed between the teaching points affects the film thickness. Accordingly, the reproducibility of the paint film thickness can be improved by taking into consideration the moving speed of the pseudo painting tool 30 for generation of the teaching points. The paint film thickness can be adjusted also by the discharge rate of paint discharged through the paint gun. In the present embodiment, since the teaching points are generated with which the moving speed of the pseudo painting tool 30 is reflected, the discharge rate of the paint gun attached to the painting robot can be constant. By making the discharge rate of the paint gun constant (fixed value), the control of the painting robot can be further facilitated.

### Modification Examples

The embodiment of the present invention has been described in detail above. The following examples represent various modification and changes that can be made based on the technical concept of the present invention.

### Modification Example

The teaching point generation apparatus 50 may further be configured to perform a process of correcting the torsion angle about the central axis of the discharge port of the paint gun attached to the painting robot. For example, the paint gun is attached to the painting robot, which is configured as a four-, five- or six-axis vertical multi-joint robot having multiple degrees of freedom. On the other hand, the pseudo painting tool 30 is operated by a hand of the user. The coordinate data on the pseudo painting tool 30 obtained by the painting simulation apparatus 10 represents the operation trajectory of the painting operation manually performed by the user. The motion range of a shoulder joint of the user operating the pseudo painting tool 10, and the motion range of the manipulator of the painting robot are not the same. Accordingly, if teaching points are generated using the coordinate data on the pseudo painting tool 30 as it is, an error may occur exceeding the limit of the motion range of the painting robot.

As described in the aforementioned embodiment, the paint gun of the painting robot and the pseudo painting tool 30 are configured to form a circular application pattern symmetrical at 360 degrees with respect to the central axis of the discharge port. Accordingly, the roll angle about the central axis (Z axis) of the discharge port is a parameter that does not affect the painting result. Accordingly, the roll angle is selected so as to increase the flexibilities of the yaw angle and the pitch angle of the paint gun in the motion range of the painting robot.

For example, in accordance with the three-dimensional position of the TCP of the painting robot, the roll angles that maximize the flexibilities of the yaw angle and the pitch angle of the paint gun in the motion range of the painting robot are identified, and are tabulated in advance. For each three-dimensional position of the TCP corresponding to an end portion of the paint target object and an end portion of a jig that holds the paint target object, the roll angle that maximizes the flexibilities of the yaw angle and the pitch angle can be set. For setting the roll angle, although it is optional, it is preferable to consider the possible torsion and bending of a cable, a tube or the like stored in the manipulator of the painting robot.

For example, in the flowchart of Figure 10 described above, the teaching point generation apparatus 50 can be configured to also perform the process of correcting the torsion angle, i.e., the selection of roll angle, when the discretization condition is set in step S311.

The operation program generation apparatus 60 generates the painting robot operation program, based on information of the roll angle corresponding to the three-dimensional position of the TCP of the painting robot, together with the teaching points generated by the teaching point generation apparatus 50.

Accordingly, the smooth movement operation can be achieved, with the positions and the angles of the teaching points generated by the decimation process by the teaching point generation apparatus 50 being maintained, while the motion range of the manipulator of the painting robot is enlarged. Furthermore, the roll angle is set in consideration of the torsion and bending of a cable, a tube or the like stored in the manipulator of the painting robot, which can avoid the risk of blocking of the tube or the like due to the torsion and bending.

### [Reference Signs List]

- 1: Painting robot operation program generation system
- 10: Painting simulation apparatus
- 11: Information storage part
- 12: Detection control part
- 13: Simulation calculation part
- 14: Image generation part
- 15: Simulation control apparatus
- 20: Head-mounted display
- 30: Pseudo painting tool
- 40: Operation detection apparatus
- 50: Teaching point generation apparatus
- 60: Operation program generation apparatus

## Claims

1. A painting robot operation program generation system (1), **characterized by** comprising:
a painting simulation apparatus (10) for performing pseudo painting in a virtual space, including:
a pseudo painting tool (30) that includes a trigger (33) operated by a hand of a user to perform pseudo painting in the virtual space;
an image generation apparatus (14) that is configured to generate an image representing pseudo painting applying virtual paint onto a virtual paint target object through the pseudo painting tool (30) in the virtual space in accordance with an operation by the user for the pseudo painting tool (30), the image including a three-dimensional image of the virtual paint target object arranged in the virtual space;
a head-mounted display (20) that is configured to be worn by the user, and to display an image generated by the image generation apparatus (14);
an operation detection apparatus (40) that is configured to detect an operation of the pseudo painting tool (30) in the virtual space; and
a log data generation apparatus (13) that is configured to generate log data pertaining to the operation of the pseudo painting tool (30), from a detection result by the operation detection apparatus (40);
a teaching point generation apparatus (50) that is configured to perform discretization calculation for the log data generated by the log data generation apparatus (13), and to generate teaching points corresponding to the log data after the discretization calculation; and
an operation program generation apparatus (60) that is configured to generate an operation program for teaching an operation of a painting robot, based on the teaching points generated by the teaching point generation apparatus (50).

2. The painting robot operation program generation system (1) according to claim 1, wherein:
the log data pertaining to the operation of the pseudo painting tool (30) includes log data on a position of the pseudo painting tool (30) in the pseudo painting; and
the teaching point generation apparatus (50) is configured to perform the discretization calculation using a Ramer-Douglas-Peucker (RDP) algorithm, for the log data on the position.

3. The painting robot operation program generation system (1) according to claim 2, wherein:
the log data pertaining to the operation of the pseudo painting tool (30) further includes log data on an attitude of the pseudo painting tool (30) in the pseudo painting; and
the teaching point generation apparatus (50) is configured to perform the discretization calculation using the RDP algorithm, for the log data on the attitude.

4. The painting robot operation program generation system (1) according to any one of claims 1 to 3, wherein:
the log data pertaining to the operation of the pseudo painting tool (30) includes log data on a position and log data on a moving speed pertaining to the pseudo painting tool (30) in the pseudo painting; and
the teaching point generation apparatus (50) is configured to perform the discretization calculation for the log data on the position using a threshold ( α ) dynamically set in accordance with the moving speed.

5. The painting robot operation program generation system (1) according to claim 4, wherein:
the log data pertaining to the operation of the pseudo painting tool (30) further includes log data on an attitude of the pseudo painting tool (30) in the pseudo painting; and
the teaching point generation apparatus (50) is configured to further perform the discretization calculation for the log data on the attitude using the threshold (α).

6. A painting robot operation program generation method, **characterized by** comprising:
generating an image representing pseudo painting applying virtual paint onto a virtual paint target object in a virtual space through a pseudo painting tool (30) that includes a trigger (33) operated by a hand of a user for performing pseudo painting in the virtual space, in accordance with an operation of the pseudo painting tool (30), the image including a three-dimensional image of the virtual paint target object arranged in the virtual space;
displaying the generated image on a head-mounted display (20) worn by the user;
detecting the operation of the pseudo painting tool (30) in the virtual space;
generating log data pertaining to the operation of the pseudo painting tool (30), from a detection result of the operation of the pseudo painting tool (30);
performing discretization calculation for the generated log data, and generating teaching points corresponding to the log data after the discretization calculation; and
generating an operation program for teaching an operation of a painting robot, based on the generated teaching points.

7. The painting robot operation program generation system (1) according to claim 1, wherein:
the log data pertaining to the operation of the pseudo painting tool includes coordinate data on the pseudo painting tool associated with a timestamp; and
the teaching point generation apparatus (50) is configured to execute:
a first step (S313) of performing first discretization calculation, using a Ramer-Douglas-Peucker (RDP) algorithm, for the coordinate data generated by the painting simulation apparatus (10), and generating a plurality of first teaching points corresponding to the coordinate data after the first discretization calculation;
a second step (S314) of calculating a moving speed at each point in the coordinate data, from the coordinate data generated by the painting simulation apparatus (10) and from the timestamp, performing second discretization calculation using the calculated moving speed, for the coordinate data, and generating a plurality of second teaching points corresponding to the coordinate data after the second discretization calculation; and
a third step (S315) of totaling the plurality of first teaching points generated in the first step (S313), and the plurality of second teaching points generated in the second step (S314), and generating a plurality of third teaching points.

8. The painting robot operation program generation system (1) according to claim 7, wherein:
the teaching point generation apparatus (50) is configured to:
in the first step (S313), generate the plurality of first teaching points by removing a plurality of first invalid points determined unnecessary to reproduce an operation trajectory of the pseudo painting tool (30) from the coordinate data through the first discretization calculation; and
in the second step (S314), generate the plurality of second teaching points by removing a plurality of second invalid points determined unnecessary to reproduce the operation trajectory of the pseudo painting tool (30) from the coordinate data through the second discretization calculation; and
the plurality of third teaching points generated in the third step (S315) represents the coordinate data from which a plurality of third invalid points determined unnecessary in both the first step (S313) and the second step (S314) are removed.

9. The painting robot operation program generation system (1) according to claim 8, wherein:
the log data pertaining to the operation of the pseudo painting tool (30) further includes film thickness data representing a distribution of film thickness on a painting surface of a paint target object that is subjected to pseudo painting, and the film thickness data is film thickness data before the discretization calculation; and
the teaching point generation apparatus (50) is configured to:
calculate a film thickness error of first film thickness data after the first discretization calculation in the first step (S313) to the film thickness data before the discretization calculation, and calculate a standard deviation ( σ ) indicating a ratio of the film thickness error to an average film thickness of the paint target object; and
set a first discretization condition for the first discretization calculation in the first step (S313) so that the standard deviation (σ) is within a first predetermined value.

10. The painting robot operation program generation system (1) according to claim 8 or 9, wherein:
the log data pertaining to the operation of the pseudo painting tool (30) further includes film thickness data representing a distribution of film thickness on a painting surface of a paint target object that is subjected to pseudo painting, and the film thickness data is film thickness data before the discretization calculation; and
the teaching point generation apparatus (50) is configured to:
calculate a film thickness error of second film thickness data after the second discretization calculation in the second step (S314) to the film thickness data before the discretization calculation, and calculate a standard deviation (σ) indicating a ratio of the film thickness error to an average film thickness of the paint target object; and
set a second discretization condition for the second discretization calculation in the second step (S314) so that the standard deviation (σ) is within a second predetermined value.

11. The painting robot operation program generation system (1) according to claim 10, wherein
the teaching point generation apparatus (50) is configured to:
set a point at a first time point in the coordinate data as a reference point (Pi), and set a point after the reference point (Pi) as a target point (Pj);
calculate a threshold (α) based on a moving speed at the reference point (Pi), as the second discretization condition for the second discretization calculation in the second step (S314), the threshold (α) being set larger with increase in the moving speed;
calculate an absolute value ( Δ vj) of a speed difference between the moving speed at the reference point (Pi), and the moving speed at the target point (Pj); and
adopt the target point (Pj) as the second teaching point and set the target point (Pj) as a new reference point, when the absolute value (Δvj) of the speed difference is equal to or greater than the threshold (α).

12. The painting robot operation program generation system (1) according to claim 11, wherein:
the teaching point generation apparatus (50) is configured not to adopt the target point (Pj) as the second teaching point and set a point after the target point (Pj) in the coordinate data as a new reference point, when the absolute value (Δvj) of the speed difference is less than the threshold (α).

13. The painting robot operation program generation system (1) according to any one of claims 8 to 12, wherein:
the teaching point generation apparatus (50) sets the discretization condition for the first discretization calculation in the first step (S313) and the discretization condition for the second discretization calculation in the second step (S314) so that a decimation rate indicating a rate of the number of third invalid points in the coordinate data is equal to or greater than a predetermined value.

14. The painting robot operation program generation system (1) according to any one of claims 7 to 13, wherein:
the operation program generation apparatus (60) is configured to generate the painting robot operation program, based on the plurality of third teaching points generated by the teaching point generation apparatus (50).

15. The painting robot operation program generation system (1) according to anyone of claims 1 to 5, wherein
the discretization calculation is decimation process for decimating the log data.

16. The painting robot operation program generation method according to claim 6, wherein
the discretization calculation is decimation process for decimating the log data.

## Patentansprüche

1. System (1) zur Erzeugung eines Lackierroboterbetriebsprogramms, **dadurch gekennzeichnet, dass** es Folgendes umfasst:
eine Lackiersimulationsvorrichtung (10) zum Durchführen einer Pseudo-Lackierung in einem virtuellen Raum, einschließlich:
eines Pseudo-Lackierwerkzeugs (30), das einen Auslöser (33) einschließt, der durch eine Hand eines Benutzers betrieben wird, um eine Pseudo-Lackierung in dem virtuellen Raum durchzuführen; einer Bilderzeugungsvorrichtung (14), die dazu konfiguriert ist, ein Bild zu erzeugen, das eine Pseudo-Lackierung darstellt, bei der virtueller Lack auf ein virtuelles Lackierzielobjekt mittels des Pseudo-Lackierwerkzeugs (30) in dem virtuellen Raum gemäß einem Betrieb des Pseudo-Lackierwerkzeugs (30) durch den Benutzer aufgetragen wird, wobei das Bild ein dreidimensionales Bild des virtuellen Lackierzielobjekts, das in dem virtuellen Raum angeordnet ist, einschließt;
eines Head-Mounted-Display (20), das dazu konfiguriert ist, von dem Benutzer getragen zu werden und ein von der Bilderzeugungsvorrichtung (14) erzeugtes Bild anzuzeigen;
einer Betriebserkennungsvorrichtung (40), die dazu konfiguriert ist, einen Betrieb des Pseudo-Lackierwerkzeugs (30) in dem virtuellen Raum zu erkennen; und
einer Protokolldatenerzeugungsvorrichtung (13), die dazu konfiguriert ist, Protokolldaten, die sich auf den Betrieb des Pseudo-Lackierwerkzeugs (30) beziehen, aus einem Erkennungsergebnis der Betriebserkennungsvorrichtung (40) zu erzeugen;
eine Vorrichtung (50) zur Erzeugung eines Lehrpunkts, die dazu konfiguriert ist, eine Diskretisierungsberechnung für die von der Protokolldatenerzeugungsvorrichtung (13) erzeugten Protokolldaten durchzuführen und nach der Diskretisierungsberechnung Lehrpunkte zu erzeugen, die den Protokolldaten entsprechen; und
eine Vorrichtung (60) zur Erzeugung von Betriebsprogrammen, die dazu konfiguriert ist, ein Betriebsprogramm zum Lehren eines Betriebs eines Lackierroboters basierend auf den Lehrpunkten, die von der Vorrichtung (50) zur Erzeugung eines Lehrpunkts erzeugt werden.

2. System (1) zur Erzeugung eines Lackierroboterbetriebsprogramms nach Anspruch 1, wobei:
die Protokolldaten, die sich auf den Betrieb des Pseudo-Lackierwerkzeugs (30) beziehen, Protokolldaten über eine Position des Pseudo-Lackierwerkzeugs (30) in der Pseudo-Lackierung einschließen; und
die Vorrichtung (50) zur Erzeugung eines Lehrpunkts dazu konfiguriert ist, die Diskretisierungsberechnung für die Protokolldaten an der Position unter Verwendung eines Ramer-Douglas-Peucker(RDP)-Algorithmus durchzuführen.

3. System (1) zur Erzeugung eines Lackierroboterbetriebsprogramms nach Anspruch 2, wobei:
die Protokolldaten, die sich auf den Betrieb des Pseudo-Lackierwerkzeugs (30) beziehen, ferner Protokolldaten über eine Haltung des Pseudo-Lackierwerkzeugs (30) in der Pseudo-Lackierung einschließen; und
die Vorrichtung (50) zur Erzeugung eines Lehrpunkts dazu konfiguriert ist, die Diskretisierungsberechnung für die Protokolldaten über die Haltung unter Verwendung des RDP-Algorithmus durchzuführen.

4. System (1) zur Erzeugung eines Lackierroboterbetriebsprogramms nach einem der Ansprüche 1 bis 3, wobei:
die Protokolldaten, die sich auf den Betrieb des Pseudo-Lackierwerkzeugs (30) beziehen, Protokolldaten über eine Position und Protokolldaten über eine Bewegungsgeschwindigkeit, die sich auf das Pseudo-Lackierwerkzeug (30) beziehen, in der Pseudo-Lackierung, einschließen; und
die Vorrichtung (50) zur Erzeugung eines Lehrpunkts dazu konfiguriert ist, die Diskretisierungsberechnung für die Protokolldaten über die Position unter Verwendung eines Schwellenwerts (α) durchzuführen, der dynamisch gemäß der Bewegungsgeschwindigkeit festgelegt wird.

5. System (1) zur Erzeugung eines Lackierroboterbetriebsprogramms nach Anspruch 4, wobei:
die Protokolldaten, die sich auf den Betrieb des Pseudo-Lackierwerkzeugs (30) beziehen, ferner Protokolldaten über eine Haltung des Pseudo-Lackierwerkzeugs (30) in der Pseudo-Lackierung einschließen; und
die Vorrichtung (50) zur Erzeugung eines Lehrpunkts dazu konfiguriert ist, ferner die Diskretisierungsberechnung für die Protokolldaten über die Haltung unter Verwendung des Schwellenwerts (α) durchzuführen.

6. Verfahren zur Erzeugung eines Lackierroboterbetriebsprogramms, **dadurch gekennzeichnet, dass** es Folgendes umfasst:
Erzeugen eines Bildes, das eine Pseudo-Lackierung darstellt, bei der virtueller Lack auf ein virtuelles Lackierzielobjekt in einem virtuellen Raum mittels eines Pseudo-Lackierwerkzeugs (30) aufgetragen wird, das einen Auslöser (33) einschließt, der von einer Hand eines Benutzers betrieben wird, um eine Pseudo-Lackierung in dem virtuellen Raum gemäß einem Betrieb des Pseudo-Lackierwerkzeugs (30) durchzuführen, wobei das Bild ein dreidimensionales Bild des virtuellen Lackierzielobjekts, das in dem virtuellen Raum angeordnet ist, einschließt;
Anzeigen des erzeugten Bildes auf einem Head-Mounted-Display (20), das von dem Benutzer getragen wird;
Erkennen des Betriebs des Pseudo-Lackierwerkzeugs (30) in dem virtuellen Raum;
Erzeugen von Protokolldaten, die sich auf den Betrieb des Pseudo-Lackierwerkzeugs (30) beziehen, aus einem Erkennungsergebnis des Betriebs des Pseudo-Lackierwerkzeugs (30);
Durchführen einer Diskretisierungsberechnung für die erzeugten Protokolldaten und Erzeugen von Lehrpunkten, die den Protokolldaten nach der Diskretisierungsberechnung entsprechen; und
Erzeugen eines Betriebsprogramms zum Lehren eines Betriebs eines Lackierroboters, basierend auf den erzeugten Lehrpunkten.

7. System (1) zur Erzeugung eines Lackierroboterbetriebsprogramms nach Anspruch 1, wobei:
die Protokolldaten, die sich auf den Betrieb des Pseudo-Lackierwerkzeugs beziehen, Koordinatendaten über das Pseudo-Lackierwerkzeug, die mit einem Zeitstempel verbunden sind, einschließen; und
die Vorrichtung (50) zur Erzeugung eines Lehrpunkts dazu konfiguriert ist, Folgendes auszuführen:
einen ersten Schritt (S313) des Durchführens einer ersten Diskretisierungsberechnung unter Verwendung eines Ramer-Douglas-Peucker(RDP)-Algorithmus für die Koordinatendaten, die von der Lackiersimulationsvorrichtung (10) erzeugt werden, und des Erzeugens einer Vielzahl von ersten Lehrpunkten, die den Koordinatendaten nach der ersten Diskretisierungsberechnung entsprechen;
einen zweiten Schritt (S314) des Berechnens einer Bewegungsgeschwindigkeit an jedem Punkt der Koordinatendaten aus den Koordinatendaten, die von der Lackiersimulationsvorrichtung (10) erzeugt werden, und aus dem Zeitstempel, des Durchführens einer zweiten Diskretisierungsberechnung unter Verwendung der berechneten Bewegungsgeschwindigkeit für die Koordinatendaten und des Erzeugens einer Vielzahl von zweiten Lehrpunkten, die den Koordinatendaten nach der zweiten Diskretisierungsberechnung entsprechen; und
einen dritten Schritt (S315) des Addierens der Vielzahl von ersten Lehrpunkten, die in dem ersten Schritt (S313) erzeugt werden, und der Vielzahl von zweiten Lehrpunkten, die in dem zweiten Schritt (S314) erzeugt werden, und Erzeugen einer Vielzahl von dritten Lehrpunkten.

8. System (1) zur Erzeugung eines Lackierroboterbetriebsprogramms nach Anspruch 7, wobei:
die Vorrichtung (50) zur Erzeugung eines Lehrpunkts zu Folgendem konfiguriert ist:
in dem ersten Schritt (S313) Erzeugen der Vielzahl von ersten Lehrpunkten, indem durch die erste Diskretisierungsberechnung aus den Koordinatendaten eine Vielzahl von ersten ungültigen Punkten entfernt wird, die zur Wiedergabe einer Betriebstrajektorie des Pseudo-Lackierwerkzeugs (30) als unnötig bestimmt werden; und
in dem zweiten Schritt (S314) Erzeugen der Vielzahl von zweiten Lehrpunkten, indem durch die zweite Diskretisierungsberechnung aus den Koordinatendaten eine Vielzahl von zweiten ungültigen Punkten entfernt wird, die zur Wiedergabe einer Betriebstrajektorie des Pseudo-Lackierwerkzeugs (30) als unnötig bestimmt werden; und
wobei die Vielzahl von dritten Lehrpunkten, die in dem dritten Schritt (S315) erzeugt werden, die Koordinatendaten darstellt, aus denen eine Vielzahl von dritten ungültigen Punkten entfernt wird, die sowohl in dem ersten Schritt (S313) als auch in dem zweiten Schritt (S314) als unnötig bestimmt werden.

9. System (1) zur Erzeugung eines Lackierroboterbetriebsprogramms nach Anspruch 8, wobei:
die Protokolldaten, die sich auf den Betrieb des Pseudo-Lackierwerkzeugs (30) beziehen, ferner Schichtdickendaten einschließen, die eine Verteilung der Schichtdicke auf einer Lackieroberfläche eines Lackierzielobjekts darstellen, das einer Pseudo-Lackierung unterzogen wird, und die Schichtdickendaten Schichtdickendaten vor der Diskretisierungsberechnung sind; und
die Vorrichtung (50) zur Erzeugung eines Lehrpunkts zu Folgendem konfiguriert ist:
Berechnen eines Schichtdickenfehlers erster Schichtdickendaten nach der ersten Diskretisierungsberechnung in dem ersten Schritt (S313) zu den Schichtdickendaten vor der Diskretisierungsberechnung und Berechnen einer Standardabweichung (σ), die ein Verhältnis des Schichtdickenfehlers zu einer durchschnittlichen Schichtdicke des Lackierzielobjekts angibt; und
Festlegen einer ersten Diskretisierungsbedingung für die erste Diskretisierungsberechnung in dem ersten Schritt (S313), sodass die Standardabweichung (σ) innerhalb eines ersten vorgegebenen Werts liegt.

10. System (1) zur Erzeugung eines Lackierroboterbetriebsprogramms nach Anspruch 8 oder 9, wobei:
die Protokolldaten, die sich auf den Betrieb des Pseudo-Lackierwerkzeugs (30) beziehen, ferner Schichtdickendaten einschließen, die eine Verteilung der Schichtdicke auf einer Lackieroberfläche eines Lackierzielobjekts darstellen, das einer Pseudo-Lackierung unterzogen wird, und die Schichtdickendaten Schichtdickendaten vor der Diskretisierungsberechnung sind; und
die Vorrichtung (50) zur Erzeugung eines Lehrpunkts zu Folgendem konfiguriert ist:
Berechnen eines Schichtdickenfehlers zweiter Schichtdickendaten nach der zweiten Diskretisierungsberechnung in dem zweiten Schritt (S314) zu den Schichtdickendaten vor der Diskretisierungsberechnung und Berechnen einer Standardabweichung (σ), die ein Verhältnis des Schichtdickenfehlers zu einer durchschnittlichen Schichtdicke des Lackierzielobjekts angibt; und
Festlegen einer zweiten Diskretisierungsbedingung für die zweite Diskretisierungsberechnung in dem zweiten Schritt (S314), sodass die Standardabweichung (σ) innerhalb eines zweiten vorgegebenen Werts liegt.

11. System (1) zur Erzeugung eines Lackierroboterbetriebsprogramms nach Anspruch 10, wobei:
die Vorrichtung (50) zur Erzeugung eines Lehrpunkts zu Folgendem konfiguriert ist:
Festlegen eines Punkts zu einem ersten Zeitpunkt in den Koordinatendaten als einen Referenzpunkt (Pi) und Festlegen eines Punkts nach dem Referenzpunkt (Pi) als einen Zielpunkt (Pj);
Berechnen eines Schwellenwerts (α) basierend auf einer Bewegungsgeschwindigkeit an dem Referenzpunkt (Pi) als die zweite Diskretisierungsbedingung für die zweite Diskretisierungsberechnung in dem zweiten Schritt (S314), wobei der Schwellenwert (α) mit zunehmender Bewegungsgeschwindigkeit größer festgelegt wird;
Berechnen eines Absolutwerts (Δ vj) einer Geschwindigkeitsdifferenz zwischen der Bewegungsgeschwindigkeit an dem Referenzpunkt (Pi) und der Bewegungsgeschwindigkeit an dem Zielpunkt (Pj); und
Übernehmen des Zielpunkts (Pj) als den zweiten Lehrpunkt und Festlegen des Zielpunkts (Pj) als einen neuen Referenzpunkt, wenn der Absolutwert (Δvj) der Geschwindigkeitsdifferenz gleich oder größer als der Schwellenwert (α) ist.

12. System (1) zur Erzeugung eines Lackierroboterbetriebsprogramms nach Anspruch 11, wobei:
die Vorrichtung (50) zur Erzeugung eines Lehrpunkts dazu konfiguriert ist, den Zielpunkt (Pj) nicht als den zweiten Lehrpunkt zu übernehmen und einen Punkt nach dem Zielpunkt (Pj) in den Koordinatendaten als einen neuen Referenzpunkt festzulegen, wenn der Absolutwert (Δvj) der Geschwindigkeitsdifferenz kleiner als der Schwellenwert (α) ist.

13. System (1) zur Erzeugung eines Lackierroboterbetriebsprogramms nach einem der Ansprüche 8 bis 12, wobei:
die Vorrichtung (50) zur Erzeugung eines Lehrpunkts die Diskretisierungsbedingung für die erste Diskretisierungsberechnung in dem ersten Schritt (S313) und die Diskretisierungsbedingung für die zweite Diskretisierungsberechnung in dem zweiten Schritt (S314) festlegt, sodass eine Dezimierungsrate, die eine Rate der Anzahl von dritten ungültigen Punkten in den Koordinatendaten angibt, gleich oder größer als ein vorgegebener Wert ist.

14. System (1) zur Erzeugung eines Lackierroboterbetriebsprogramms nach einem der Ansprüche 7 bis 13, wobei:
die Vorrichtung (60) zur Erzeugung des Betriebsprogramms dazu konfiguriert ist, das Lackierroboterbetriebsprogramm basierend auf der Vielzahl von dritten Lehrpunkten zu erzeugen, die von der Vorrichtung (50) zur Erzeugung eines Lehrpunkts erzeugt werden.

15. System (1) zur Erzeugung eines Lackierroboterbetriebsprogramms nach einem der Ansprüche 1 bis 5, wobei
die Diskretisierungsberechnung ein Dezimierungsprozess zum Dezimieren der Protokolldaten ist.

16. Verfahren zur Erzeugung eines Lackierroboterbetriebsprogramms nach Anspruch 6, wobei die Diskretisierungsberechnung ein Dezimierungsprozess zum Dezimieren der Protokolldaten ist.

## Revendications

1. Système de génération de programme de fonctionnement de robot de peinture (1), **caractérisé en ce qu'**il comprend :
un appareil de simulation de peinture (10) pour réaliser une pseudo-peinture dans un espace virtuel, comportant :
un outil de pseudo-peinture (30) qui comporte un déclencheur (33) actionné par une main d'un utilisateur pour réaliser une pseudo-peinture dans l'espace virtuel ;
un appareil de génération d'image (14) qui est configuré pour générer une image représentant une pseudo-peinture appliquant de la peinture virtuelle sur un objet cible de peinture virtuelle à travers l'outil de pseudo-peinture (30) dans l'espace virtuel conformément à un fonctionnement par l'utilisateur de l'outil de pseudo-peinture (30), l'image comportant une image tridimensionnelle de l'objet cible de peinture virtuelle agencée dans l'espace virtuel ;
un affichage monté sur la tête (20) qui est configuré pour être porté par l'utilisateur et pour afficher une image générée par l'appareil de génération d'image (14) ;
un appareil de détection de fonctionnement (40) qui est configuré pour détecter un fonctionnement de l'outil de pseudo-peinture (30) dans l'espace virtuel ; et
un appareil de génération de données de journal (13) qui est configuré pour générer des données de journal relatives au fonctionnement de l'outil de pseudo-peinture (30), à partir d'un résultat de détection par l'appareil de détection de fonctionnement (40) ;
un appareil de génération de points d'enseignement (50) qui est configuré pour réaliser un calcul de discrétisation pour les données de journal générées par l'appareil de génération de données de journal (13), et pour générer des points d'enseignement correspondant aux données de journal après le calcul de discrétisation ; et
un appareil de génération de programme de fonctionnement (60) qui est configuré pour générer un programme de fonctionnement pour enseigner un fonctionnement d'un robot de peinture, sur la base des points d'enseignement générés par l'appareil de génération de points d'enseignement (50).

2. Système de génération de programme de fonctionnement de robot de peinture (1) selon la revendication 1, dans lequel :
les données de journal relatives au fonctionnement de l'outil de pseudo-peinture (30) comportent des données de journal sur une position de l'outil de pseudo-peinture (30) dans la pseudo-peinture ; et
l'appareil de génération de points d'enseignement (50) est configuré pour réaliser le calcul de discrétisation à l'aide d'un algorithme Ramer-Douglas-Peucker (RDP), pour les données de journal sur la position.

3. Système de génération de programme de fonctionnement de robot de peinture (1) selon la revendication 2, dans lequel :
les données de journal relatives au fonctionnement de l'outil de pseudo-peinture (30) comportent en outre des données de journal sur une attitude de l'outil de pseudo-peinture (30) dans la pseudo-peinture ; et
l'appareil de génération de points d'enseignement (50) est configuré pour réaliser le calcul de discrétisation à l'aide de l'algorithme RDP, pour les données de journal sur l'attitude.

4. Système de génération de programme de fonctionnement de robot de peinture (1) selon l'une quelconque des revendications 1 à 3, dans lequel :
les données de journal relatives au fonctionnement de l'outil de pseudo-peinture (30) comportent des données de journal sur une position et des données de journal sur une vitesse de déplacement relatives à l'outil de pseudo-peinture (30) dans la pseudo-peinture ; et
l'appareil de génération de points d'enseignement (50) est configuré pour réaliser le calcul de discrétisation pour les données de journal sur la position à l'aide d'un seuil (α) défini dynamiquement en fonction de la vitesse de déplacement.

5. Système de génération de programme de fonctionnement de robot de peinture (1) selon la revendication 4, dans lequel :
les données de journal relatives au fonctionnement de l'outil de pseudo-peinture (30) comportent en outre des données de journal sur une attitude de l'outil de pseudo-peinture (30) dans la pseudo-peinture ; et
l'appareil de génération de points d'enseignement (50) est configuré pour réaliser en outre le calcul de discrétisation pour les données de journal sur l'attitude à l'aide du seuil (α).

6. Procédé de génération de programme de fonctionnement de robot de peinture, **caractérisé en ce qu'**il comprend :
la génération d'une image représentant une pseudo-peinture appliquant de la peinture virtuelle sur un objet cible de peinture virtuelle dans un espace virtuel à travers un outil de pseudo-peinture (30) qui comporte un déclencheur (33) actionné par une main d'un utilisateur pour réaliser une pseudo-peinture dans l'espace virtuel, conformément à un fonctionnement de l'outil de pseudo-peinture (30), l'image comportant une image tridimensionnelle de l'objet cible de peinture virtuelle agencée dans l'espace virtuel ;
l'affichage de l'image générée sur un affichage monté sur la tête (20) porté par l'utilisateur ;
la détection du fonctionnement de l'outil de pseudo-peinture (30) dans l'espace virtuel ;
la génération de données de journal relatives au fonctionnement de l'outil de pseudo-peinture (30), à partir d'un résultat de détection du fonctionnement de l'outil de pseudo-peinture (30) ;
la réalisation du calcul de discrétisation pour les données de journal générées, et la génération de points d'enseignement correspondant aux données de journal après le calcul de discrétisation ; et
la génération d'un programme de fonctionnement pour enseigner un fonctionnement d'un robot de peinture, sur la base des points d'enseignement générés.

7. Système de génération de programme de fonctionnement de robot de peinture (1) selon la revendication 1, dans lequel :
les données de journal relatives au fonctionnement de l'outil de pseudo-peinture comportent des données de coordonnées sur l'outil de pseudo-peinture associées à un horodatage ; et
l'appareil de génération de points d'enseignement (50) est configuré pour exécuter :
une première étape (S313) de réalisation d'un premier calcul de discrétisation, à l'aide d'un algorithme Ramer-Douglas-Peucker (RDP), pour les données de coordonnées générées par l'appareil de simulation de peinture (10), et de génération d'une pluralité de premiers points d'enseignement correspondant aux données de coordonnées après le premier calcul de discrétisation ;
une deuxième étape (S314) de calcul d'une vitesse de déplacement à chaque point des données de coordonnées, à partir des données de coordonnées générées par l'appareil de simulation de peinture (10) et à partir de l'horodatage, de réalisation d'un second calcul de discrétisation à l'aide de la vitesse de déplacement calculée, pour les données de coordonnées, et de génération d'une pluralité de deuxièmes points d'enseignement correspondant aux données de coordonnées après le second calcul de discrétisation ; et
une troisième étape (S315) de totalisation de la pluralité de premiers points d'enseignement générés dans la première étape (S313), et de la pluralité des deuxièmes points d'enseignement générés dans la deuxième étape (S314), et de génération d'une pluralité de troisièmes points d'enseignement.

8. Système de génération de programme de fonctionnement de robot de peinture (1) selon la revendication 7, dans lequel :
l'appareil de génération de points d'enseignement (50) est configuré pour :
dans la première étape (S313), générer la pluralité de premiers points d'enseignement en supprimant une pluralité de premiers points invalides jugés inutiles pour reproduire une trajectoire de fonctionnement de l'outil de pseudo-peinture (30) à partir des données de coordonnées à travers le premier calcul de discrétisation ; et
dans la deuxième étape (S314), générer la pluralité de deuxièmes points d'enseignement en supprimant une pluralité de deuxièmes points invalides jugés inutiles pour reproduire la trajectoire de fonctionnement de l'outil de pseudo-peinture (30) à partir des données de coordonnées à travers le second calcul de discrétisation ; et
la pluralité de troisièmes points d'enseignement générés dans la troisième étape (S315) représente les données de coordonnées à partir desquelles une pluralité de troisièmes points invalides jugés inutiles à la fois dans la première étape (S313) et dans la deuxième étape (S314) sont supprimés.

9. Système de génération de programme de fonctionnement de robot de peinture (1) selon la revendication 8, dans lequel :
les données de journal relatives au fonctionnement de l'outil de pseudo-peinture (30) comportent en outre des données d'épaisseur de film représentant une distribution d'épaisseur de film sur une surface de peinture d'un objet cible de peinture qui est soumis à la pseudo-peinture, et les données d'épaisseur de film sont des données d'épaisseur de film avant le calcul de discrétisation ; et
l'appareil de génération de points d'enseignement (50) est configuré pour :
calculer une erreur d'épaisseur de film de premières données d'épaisseur de film après le premier calcul de discrétisation dans la première étape (S313) par rapport aux données d'épaisseur de film avant le calcul de discrétisation, et calculer un écart type (σ) indiquant un rapport entre l'erreur d'épaisseur de film et l'épaisseur de film moyenne de l'objet cible de peinture ; et
définir une première condition de discrétisation pour le premier calcul de discrétisation dans la première étape (S313) de sorte que l'écart type (σ) est dans une première valeur prédéterminée.

10. Système de génération de programme de fonctionnement de robot de peinture (1) selon la revendication 8 ou 9, dans lequel :
les données de journal relatives au fonctionnement de l'outil de pseudo-peinture (30) comportent en outre des données d'épaisseur de film représentant une distribution d'épaisseur de film sur une surface de peinture d'un objet cible de peinture qui est soumis à la pseudo-peinture, et les données d'épaisseur de film sont des données d'épaisseur de film avant le calcul de discrétisation ; et
l'appareil de génération de points d'enseignement (50) est configuré pour :
calculer une erreur d'épaisseur de film de secondes données d'épaisseur de film après le second calcul de discrétisation dans la seconde étape (S314) par rapport aux données d'épaisseur de film avant le calcul de discrétisation, et calculer un écart type (σ) indiquant un rapport entre l'erreur d'épaisseur de film et l'épaisseur de film moyenne de l'objet cible de peinture ; et
définir une seconde condition de discrétisation pour le second calcul de discrétisation dans la seconde étape (S314) de sorte que l'écart type (σ) est dans une seconde valeur prédéterminée.

11. Système de génération de programme de fonctionnement de robot de peinture (1) selon la revendication 10, dans lequel l'appareil de génération de points d'enseignement (50) est configuré pour :
définir un point au niveau d'un premier point temporel dans les données de coordonnées comme point de référence (Pi), et définir un point après le point de référence (Pi) comme point cible (Pj) ;
calculer un seuil (α) sur la base d'une vitesse de déplacement au niveau du point de référence (Pi), comme seconde condition de discrétisation pour le second calcul de discrétisation dans la deuxième étape (S314), le seuil (α) étant défini plus grand avec l'augmentation de la vitesse de déplacement ;
calculer une valeur absolue (Δ vj) d'une différence de vitesse entre la vitesse de déplacement au niveau du point de référence (Pi) et la vitesse de déplacement au niveau du point cible (Pj) ; et
adopter le point cible (Pj) comme deuxième point d'enseignement et définir le point cible (Pj) comme nouveau point de référence, lorsque la valeur absolue (Δvj) de la différence de vitesse est égale ou supérieure au seuil (α).

12. Système de génération de programme de fonctionnement de robot de peinture (1) selon la revendication 11, dans lequel :
l'appareil de génération de points d'enseignement (50) est configuré pour ne pas adopter le point cible (Pj) comme deuxième point d'enseignement et pour définir un point après le point cible (Pj) dans les données de coordonnées comme nouveau point de référence, lorsque la valeur absolue (Δvj) de la différence de vitesse est inférieure au seuil (α).

13. Système de génération de programme de fonctionnement de robot de peinture (1) selon l'une quelconque des revendications 8 à 12, dans lequel :
l'appareil de génération de points d'enseignement (50) définit la condition de discrétisation pour le premier calcul de discrétisation dans la première étape (S313) et la condition de discrétisation pour le second calcul de discrétisation dans la deuxième étape (S314) de sorte qu'un taux de décimation indiquant un taux du nombre de troisièmes points invalides dans les données de coordonnées est égal ou supérieur à une valeur prédéterminée.

14. Système de génération de programme de fonctionnement de robot de peinture (1) selon l'une quelconque des revendications 7 à 13, dans lequel :
l'appareil de génération de programme de fonctionnement (60) est configuré pour générer le programme de fonctionnement de robot de peinture, sur la base de la pluralité de troisièmes points d'enseignement générés par l'appareil de génération de points d'enseignement (50).

15. Système de génération de programme de fonctionnement de robot de peinture (1) selon l'une quelconque des revendications 1 à 5, dans lequel
le calcul de discrétisation est un processus de décimation permettant de décimer les données de journal.

16. Procédé de génération de programme de fonctionnement de robot de peinture selon la revendication 6, dans lequel le calcul de discrétisation est un processus de décimation permettant de décimer les données de journal.
